# EUROPEAN PATENT SPECIFICATION

(11) **EP 3 067 396 B1**
(45) Date of publication and mention of the grant of the patent: **17.04.2019**
(21) Application number: 16159587.1
(22) Date of filing: 10.03.2016
(51) Int. Cl.: C09D 11/101, C09D 11/322, C09D 11/38

(54) **ULTRAVIOLET CURABLE COMPOSITION AND RECORDED OBJECT**
UV-HÄRTBARE ZUSAMMENSETZUNG UND AUFGEZEICHNETES OBJEKT
COMPOSITION DURCISSABLE AUX ULTRAVIOLETS ET OBJET ENREGISTRÉ

(30) Priority: 10.03.2015 JP 2015047767; 09.03.2016 JP 2016046226
(43) Date of publication of application: 14.09.2016
(73) Proprietor: Seiko Epson Corporation, Shinjuku-ku Tokyo (JP)
(72) Inventor: TAKIGUCHI, Hiroshi, Suwa-shi, Nagano 392-8502 (JP); NAKANO, Keitaro, Suwa-shi, Nagano 392-8502 (JP); SUZUKI, Yoshiyuki, Suwa-shi, Nagano 392-8502 (JP)
(74) Representative: Miller Sturt Kenyon

(56) References cited:
- EP-A1- 2 623 570
- EP-A1- 2 738 229
- JP-A- 2013 023 628
- US-A1- 2012 295 076
- US-A1- 2012 295 082
- US-A1- 2014 093 709

## Description

### BACKGROUND

### 1. Technical Field

The present invention relates to an ultraviolet curable composition and a recorded object.

### 2. Related Art

In the related art, as a manufacturing method of a decoration which exhibits a shiny appearance, a metal plating method, a foil printing method by using a metal foil, and a thermal transfer method by using a metal foil have been used.

However, there is a problem in that it is difficult for these methods to form a fine pattern and to be applied to a curved surface portion.

On the other hand, a recording method of imparting a composition containing a pigment or dye on a recording medium through an ink jet method has been used. These methods are excellent in that it is preferably applicable to form a fine pattern, and to perform recording on a curved surface portion. In addition, in recent years, in order to make abrasion resistance, water resistance, and solvent resistance particularly excellent, a composition (an ultraviolet curable composition) which is cured by being irradiated with an ultraviolet ray has been used (for example, refer to JP-A-2009-57548).

However, in a case of simply applying the metal powder instead of a pigment or dye, there is a problem in that discharge stability of a liquid droplet by the ink jet method is deteriorated, a discharge defect is easily generated, and an original characteristic of the metal such as glossiness cannot be sufficiently exhibited.

### SUMMARY

An advantage of some aspects of the invention is to provide an ultraviolet curable composition which is excellent in discharge stability by an ink jet method and is capable of stably forming a pattern (a printing unit) which is excellent in glossiness, and a recorded object having the pattern (the printing unit) which is excellent in the glossiness.

The invention is adopted as follows.

According to an aspect of the invention, there is provided an ultraviolet curable composition containing a polymerizable compound; and metal powder, in which the metal powder contains a material which is subjected to surface treatment as a constituting particle, and a volume average particle size of the metal powder is in a range of 0.2 µm to 0.64 µm.

With this, it is possible to provide an ultraviolet curable composition which is excellent in discharge stability by an ink jet method, and is capable of stably forming a pattern excellent in glossiness (a printing unit).

In the ultraviolet curable composition of the invention, it is preferable that the metal powder contains a material which is subjected to the surface treatment by using a fluorine-based surface treating agent as the constituting particle.

With this, it is possible for the storage stability and the discharge stability of the ultraviolet curable composition for a long period of time to be sufficiently excellent, and in a recorded object which is manufactured by using the ultraviolet curable composition, it is possible to preferably arrange metal powders in the vicinity of an outer surface of the printing unit, and to more efficiently exhibit characteristics such as glossiness which originally belongs to a metal material forming the metal powder. In addition, even when a polymerizable compound having low surface tension is used as a constituting material of the ultraviolet curable composition, in the recorded object which is manufactured by using the ultraviolet curable composition it is possible to preferably and reliably arrange (leafing) metal powders in the vicinity of an outer surface of the printing unit, and to more efficiently exhibit characteristics such as glossiness which originally belongs to a metal material forming the metal powder. In addition, it is possible to make abrasion resistance of the printing unit which is formed by using the ultraviolet curable composition particularly excellent.

In the ultraviolet curable composition of the invention, it is preferable that the fluorine-based surface treating agent has one or two or more types selected from the group consisting of a fluorine-based silane compound, a fluorine-based phosphate compound, a fluorine-substituted fatty acid, and a fluorine-based isocyanate compound.

With this, it is possible to make characteristics of the ultraviolet curable composition such as the storage stability, the discharge stability for a long period of time, the glossiness of the printing unit, and abrasion resistance further excellent.

In the ultraviolet curable composition of the invention, it is preferable that the metal powder contains, as the constituting particle, a material in which a base particle of which at least a main surface is mainly formed of Al is subjected to the surface treatment by using the surface treating agent.

With this, it is possible to make the glossiness and sophisticated feelings of the recorded object be particularly excellent while suppressing an increase in production costs of the recorded object. In addition, among various metallic materials, Al originally exhibits particularly excellent glossiness; however, the inventors have found that when a particle formed of Al is applied to the ultraviolet curable composition, the storage stability of the ultraviolet curable composition is particularly low, and a problem such as deterioration of the discharge stability due to the increase in the viscosity by gelation is particularly easy to occur. In contrast, even in a case where a particle of which the surface is formed of Al is used, by setting an average particle size of the metal powder to be a value within a predetermined range and by performing surface treatment by using a surface treating agent, it is possible to reliably prevent the above-described problem. That is, the average particle size of the metal powder is the value within a predetermined range, and in the metal powder, a base particle of which at least a main surface is mainly formed of Al is subjected to the surface treatment by using the surface treating agent, and thus the above-described effect is remarkably exhibited.

In the ultraviolet curable composition of the invention, the constituting particle of the metal powder is preferably formed into a scaly shape.

With this, on a recording medium to which the ultraviolet curable composition is imparted, it is possible to dispose the metal powder such that the main surface of the particle is formed along a surface shape of the recording medium, to more efficiently exhibit the glossiness or the like which originally belongs to a metal material forming the metal powder even in the recorded object to be obtained, to make the glossiness and sophisticated feelings of the formed pattern (the printing unit) be particularly excellent, and to make the abrasion resistance of the recorded object be particularly excellent. In addition, in the configuration in which the surface treatment is not performed by using the above-described surface treating agent, when the particle forming the metal powder is formed into a scaly shape, the ultraviolet curable composition is likely to have low storage stability and the discharge stability; however, when the particle forming the metal powder has a predetermined average particle size and the surface treatment is performed by using the surface treating agent, even in a case where the particle forming the metal powder is formed into the scaly shape, it is possible to reliably prevent the occurrence of such a problem. That is, in a case where the particle forming the metal powder has the predetermined average particle size, is subjected to the surface treatment by using the surface treating agent, and is formed into the scaly shape, these effects synergistically act, and thus it is possible to manufacture the recorded object which is particularly excellent in the glossiness and the sophisticated feelings with particularly excellent productivity.

In the ultraviolet curable composition of the invention, it is preferable that an average thickness of the constituting particle of the metal powder is in a range of 10 nm to 80 nm.

With this, it is also possible to make the glossiness, sophisticated feelings, and abrasion resistance of the printing unit further excellent.

In the ultraviolet curable composition of the invention, it is preferable that a particle size (D₁₀) from the fine particle side of the metal powder at a volume cumulative distribution rate 10% is in a range of 0.10 µm to 0.40 µm.

With this, it is possible to make the discharge stability of the ultraviolet curable composition by the ink jet method particularly excellent.

In the ultraviolet curable composition of the invention, it is preferable that a particle size (D₉₀) from the fine particle side of the metal powder at a volume cumulative distribution rate 90% is in a range of 0.40 µm to 1.10 µm.

With this, it is possible to make the discharge stability of the ultraviolet curable composition by the ink jet method particularly excellent.

In the ultraviolet curable composition of the invention, it is preferable that a half-value width of the metal powder in a particle size distribution is equal to or lower than 0.45 µm.

With this, it is possible to make the discharge stability of the ultraviolet curable composition by the ink jet method particularly excellent.

In the ultraviolet curable composition of the invention, it is preferable to contain a monomer having an alicyclic structure as the polymerizable compound.

With this, it is possible to make the storage stability and the discharge stability of the ultraviolet curable composition particularly excellent, and to make the glossiness and the abrasion resistance of the printing unit of the recorded object which is manufactured by using of the ultraviolet curable composition particularly excellent.

In the ultraviolet curable composition of the invention, the monomer having an alicyclic structure preferably contains one or two or more types selected from the group consisting of tris(2-acryloyloxyethyl) isocyanurate, dicyclopentenyloxyethyl acrylate, adamantyl acrylate, γ-butyrolactone acrylate, N-vinyl caprolactam, N-vinyl pyrrolidone, pentamethyl piperidyl acrylate, tetramethyl piperidyl acrylate, 2-methyl-2-adamantyl acrylate, 2-ethyl-2-adamantyl acrylate, mevalonic acid lactone acrylate, dimethylol tricyclodecane diacrylate, dimethylol di-cyclopentane diacrylate, dicyclopentenyl acrylate, dicyclopentanyl acrylate, isobornyl acrylate, cyclohexyl acrylate, acryloyl morpholine, tetrahydrofurfuryl acrylate, cyclohexane spiro-2-(1,3-dioxolan-4-yl) methyl acrylate, and (2-methyl-2-ethyl-1,3-dioxolane-4-yl) methyl acrylate.

With this, it is also possible to make the glossiness, and the sophisticated feelings of the recorded object which is manufactured by using the ultraviolet curable composition further excellent. In addition, it is possible to make the storage stability and the discharge stability of the ultraviolet curable composition further excellent.

In the ultraviolet curable composition of the invention, a polymerizable compound other than the monomer having an alicyclic structure preferably contains one or two or more types selected from the group consisting of phenoxyethyl acrylate, benzyl acrylate, 2-acrylic acid (2-vinyloxy ethoxy)ethyl, dipropylene glycol diacrylate, tripropylene glycol diacrylate, 2-hydroxy-3-phenoxy propyl acrylate, and 4-hydroxybutyl acrylate.

With this, it is possible to make the storage stability and the discharge stability of the ultraviolet curable composition excellent, to make reactivity of the ultraviolet curable composition after being discharged by the ink jet method particularly excellent, to make productivity of the recorded object particularly excellent, and to make the abrasion resistance of the formed pattern particularly excellent.

According to another aspect of the invention, there is provided a recorded object which is manufactured by imparting the ultraviolet curable composition according to the invention on a recording medium through an ink jet method, and then being irradiated with an ultraviolet ray.

With this, it is possible to provide the recorded object having the pattern (the printing unit) which is excellent in the glossiness and prevents the occurrence of defects.

### DESCRIPTION OF EXEMPLARY EMBODIMENTS

Hereinafter, the preferred embodiments of the present invention will be described in detail by way of example only.

### Ultraviolet curable composition

First, an ultraviolet curable composition of the invention will be described.

The ultraviolet curable composition of the invention contains a polymerizable compound which is polymerized by being irradiated with an ultraviolet ray, and metal powder.

Incidentally, in the related art, as a manufacturing method of a decoration which exhibits a shiny appearance, a metal plating method, a foil printing method by using a metal foil, and a thermal transfer method by using a metal foil have been used.

However, there is a problem in that these methods are difficult to form a fine pattern and are difficult to be applied to a curved surface portion.

On the other hand, a recording method of imparting a composition containing a pigment or dye on a recording medium through an ink jet method has been used. These methods are excellent in that it is preferable to form a fine pattern, and to perform recording on a curved surface portion. In addition, in recent years, in order to make abrasion resistance, water resistance, and solvent resistance particularly excellent, a composition (an ultraviolet curable composition) which is cured by being irradiated with an ultraviolet ray has been used.

However, in a case of simply applying the metal powder instead of a pigment or dye, there is a problem in that discharge stability of a liquid droplet by the ink jet method is deteriorated, a discharge defect is easily generated, and an original characteristic of the metal such as glossiness cannot be sufficiently exhibited.

In this regard, the inventors have conducted intensive studies in order to solve the above problems and thus have accomplished the invention as a result. That is, the ultraviolet curable composition of the invention (an ultraviolet curable-type ink jet composition) contains a material which is subjected to the surface treatment as a constituting particle of the metal powder, and a volume average particle size (D₅₀) of the metal powder is in a range of 0.2 µm to 0.64 µm.

With this, it is possible to stably form a pattern which is excellent in the discharge stability by the ink jet method, and is excellent in the glossiness (the printing unit).

### Metal powder

The ultraviolet curable composition of the invention contains the metal powder.

The metal powder contains a plurality of particles, the particle forming the metal powder is formed such that at least a portion of a site which is visually recognized on the appearance is formed of a metallic material, and typically, the vicinity of the outer surface is formed of the metallic material.

In the ultraviolet curable composition of the invention, the metal powder contains a material which is subjected to the surface treatment, as a constituting particle. That is, the metal powder contains a constituting particle including a base particle and a film by a surface treating agent.

### Base particle

First, a base particle (a particle which is subjected to surface treatment by using a surface treating agent) of a particle which forms metal powder will be described.

The base particle of the particle forming the metal powder may be formed such that at least an area including the vicinity of the surface is formed of a metallic material, for example, the entire surface is formed of a metallic material, or may include a base portion formed of a nonmetallic material, and a film formed of a metal material with which the base portion is coated.

In addition, as the metal material forming the base particle, it is possible to use metal as a simple substance and various types of alloys; however, the base particle is preferably a material of which at least the vicinity of the surface is mainly formed of Al. The specific gravity (2.70 g/cm²) is lower than iron or the like, and thus Al is preferably used. With this, when the particles formed of Al are dispersed in the ultraviolet curable composition, sedimentation very slowly progresses, and thus it is possible to store the ultraviolet curable composition for a long period of time without causing a concentration change.

In addition, it is possible to make the glossiness and sophisticated feelings of the recorded object be particularly excellent while suppressing an increase in production costs of the recorded object. In addition, among various metallic materials, Al originally exhibits particularly excellent glossiness; however, the inventors have found that when a particle formed of Al is applied to the ultraviolet curable composition, the storage stability of the ultraviolet curable composition is particularly low, and a problem of deterioration of the discharge stability due to the increase in the viscosity by gelation is particularly easy to occur. In contrast, even in a case where a particle of which the surface is formed of Al, by setting an average particle size of the metal powder to be a value within a predetermined range and by performing surface treatment by using a surface treating agent, it is possible to reliably prevent the above-described problem. That is, if the average particle size of the metal powder is the value within a predetermined range, and if a base particle of the metal powder has at least a main surface mainly formed of Al and is subjected to the surface treatment by using the surface treating agent, then the above-described effect is remarkably exhibited.

The base particle may be formed by using any method; however, in a case where the base particle is formed of Al, it is preferable to obtain the base particle by forming a film formed of Al by using a vapor deposition method, and thereafter, pulverizing the film. With this, in the pattern (the printing unit) which is formed by using the ultraviolet curable composition of the invention, it is possible to efficiently exhibit the glossiness or the like which originally belongs to Al. In addition, it is possible to suppress the variation of the characteristics between the respective particles. In addition, with the aforementioned method, it is possible to preferably manufacture even a relatively small metal powder.

In a case where the base particle is manufactured by using such a method, for example, it is possible to preferably manufacture the base particle by forming (film formation) the film formed of Al on the base material. As the base material, for example, it is possible to use a plastic film such as polyethylene terephthalate. In addition, the base material may be one having a release agent layer on the deposition surface.

Further, it is preferable that the pulverization is performed by imparting ultrasonic vibration to the film, in the liquid. With this, it is possible to easily and reliably obtain the metal powder having a fine particle size described below, and to suppress the occurrence of variations in sizes, shapes, and characteristics between the respective particles.

In addition, when the pulverization is performed through the above-described method, as the liquid, it is preferable to use alcohols such as methanol, ethanol, propanol, and butanol, a hydrocarbon compound such as n-heptane, n-octane, decane, dodecane, tetradecane, toluene, xylene, cymene, durene, indene, dipentene, tetrahydronaphthalene, decahydronaphthalene, and cyclohexyl benzene, an ether-based compound such as ethylene glycol dimethyl ether, ethylene glycol diethyl ether, ethylene glycol methyl ethyl ether, diethylene glycol dimethyl ether, diethylene glycol diethyl ether, diethylene glycol methyl ethyl ether, diethylene glycol monobutyl ether acetate, diethylene glycol n-butyl ether, tripropylene glycol dimethyl ether, triethylene glycol diethyl ether, 1,2-dimethoxyethane, bis(2-methoxyethyl)ether, and the p-dioxane, and a polar compound such as propylene carbonate, γ-butyrolactone, N-methyl-2-pyrrolidone, N,N-dimethyl formamide (DMF), N,N-dimethyl acetamide (DMA), dimethyl sulfoxide, cyclohexanone, and acetonitrile. By using the above-described liquids, it is possible to make productivity of the base particle and the metal powder particularly excellent while preventing the base particle from being reluctantly oxidized, and it is also possible to make the variations in the sizes, shapes, and characteristics between the respective particles particularly small.

### Surface treating agent

Next, the surface treating agent which is used for the surface treatment on the base particle will be described.

The surface treating agent has a function of increasing the dispersion stability of the metal powder (the particle) in the ultraviolet curable composition, and improving the discharge stability by the ink jet method. In addition, in a case where the metal powder is subjected to the surface treatment such that the surface energy of the metal powder is decreased, even when a polymerizable compound having low surface tension is used as a constituting material of the ultraviolet curable composition, in the recorded object which is manufactured by using the ultraviolet curable composition it is possible to preferably and reliably arrange (leafing) metal powders in the vicinity of an outer surface of the printing unit, and to more efficiently exhibit characteristics such as glossiness which originally belongs to a metal material forming the metal powder. Accordingly, the selection range of the polymerizable compound is widened, and it is possible to easily adjust characteristics of the ultraviolet curable composition and characteristics of the recorded object which is manufactured by using the ultraviolet curable composition (for example, the viscosity, the storage stability, and the discharge stability of the ultraviolet curable composition, and abrasion resistance of the recorded object) without losing the glossiness which originally belongs to the metallic material.

Examples of the surface treating agent include a short-chain compound having an alkyl group which may have a substituent group having 2 to 4 carbon atoms, a long-chain compound having an alkyl group which may have a substituent group having 8 to 20 carbon atoms, a silane compound, a phosphate compound, a carboxylic acid, and an isocyanate compound.

In a case where the surface treating agent is the alkyl group which is contained in the short-chain compound and (or) the alkyl group which is contained in the long-chain compound are a substituent group, examples of the substituent group includes a halogeno group such as a fluoro group, a chloro group, and a bromo group, and a hydroxyl group.

As the silane compound, it is possible to use a compound having a structure in which a hydrogen atom and (or) a hydrocarbon group (including those in which a part or all of hydrogen atoms are substituted by other atoms or atomic groups) are directly bonded to a silicon atom.

More specifically, as the silane compound, for example, silicon hydride (SiₙH₂ₙ₊₂ (here, n is an integer of 1 or more)) and HₐSiR₍₄₋ₐ₎ (Here, R is a hydrocarbon group which may be a substituent group, a is an integer in a range of 1 to 4) can be used.

As the phosphate compound, for example, a compound (a long-chain alkyl-based phosphate compound) having at least one alkyl group having 6 or more carbon atoms in the molecule can be used.

Particularly, a phosphate compound (a long-chain alkyl-based phosphate compound) preferably has a chemical structure expressed by formula (1) described below.

PORₙ(OH)₃₋ₙ (1)

(In formula (1), R is CH₃(CH₂)ₘ-, CH₃(CH₂)ₘ(CH₂O)ₗ-, CH₃(CH₂)ₘ (CH₂CH₂O)ₗ-, or CH₃(CH₂)ₘO-, here, n is an integer in a range of 1 to 3, m is an integer in a range of 5 to 19, and I is an integer in a range of 2 to 20).

With this, it is possible to make the storage stability and the discharge stability by the ink jet method of the ultraviolet curable composition particularly excellent, and make the glossiness and the abrasion resistance of the printing unit of the recorded object which is manufactured by using the ultraviolet curable composition particularly excellent.

In formula (1), m is preferably an integer in a range of 5 to 19, and is more preferably an integer in a range of 7 to 17. With this, the above-described effect is more remarkably exhibited.

In addition, in formula (1), I is preferably an integer in a range of 2 to 20, and is more preferably an integer in a range of 4 to 16. With this, the above-described effect is more remarkably exhibited.

As the carboxylic acid, it is possible to use a hydrocarbon group, and a compound (a fatty acid) having a carboxyl group. Specific examples of such a compound include a decanoic acid, a tetradecanoic acid, an octadecanoic acid, a cis-9-octadecenoic acid.

As the isocyanate compound, it is possible to use a compound having a partial structure expressed by -N = C = O. Such a compound reacts with the metal material forming the metal powder (the base particle) so as to decorate the surface of the particle (the base particle) as a compound having a partial structure expressed by -NHCOO-; however, a force of hydrogen bond works in the partial structure expressed by -NHCOO-. For this reason, it is possible to perform the precise surface treatment on the surface of the particle, and thus the above-described effect can be more remarkably exhibited.

As an isocyanate compound, it is possible to use a compound having at least one isocyanate group in the molecule.

As an isocyanate compound, for example, it is possible to use a compound having a chemical structure expressed by formula (2) described below.

RNCO (2)

(In formula (2), R is CH₃(CH₂)ₘ-, and m is an integer in a range of 2 to 18.)

In formula (2), m is preferably an integer in a range of 3 to 14, and is more preferably an integer in a range of 4 to 12.

As the surface treating agent, a fluorine compound (fluorine-based surface treating agent) may be used.

With this, in a recorded object which can make chemical stability and dispersion stability of the metal powder in the ultraviolet curable composition to be sufficiently excellent, and make the storage stability and the discharge stability of the ultraviolet curable composition for a long period of time to be sufficiently excellent, and which is manufactured by using the ultraviolet curable composition, it is possible to preferably arrange metal powders in the vicinity of an outer surface of the printing unit, and to more efficiently exhibit characteristics such as glossiness which originally belongs to a metal material forming the metal powder. In addition, even when a polymerizable compound having low surface tension is used as a constituting material of the ultraviolet curable composition, in the recorded object which is manufactured by using the ultraviolet curable composition it is possible to preferably and reliably arrange (leafing) metal powders in the vicinity of an outer surface of the printing unit, and to more efficiently exhibit characteristics such as glossiness which originally belongs to a metal material forming the metal powder. Accordingly, the selection range of the polymerizable compound is widened, and it is possible to easily adjust characteristics of the ultraviolet curable composition and characteristics of the recorded object which is manufactured by using the ultraviolet curable composition (for example, the viscosity, the storage stability, and the discharge stability of the ultraviolet curable composition, and abrasion resistance of the recorded object) without losing the glossiness which originally belongs to the metallic material. In addition, it is possible to make the abrasion resistance of the printing unit which is formed by using the ultraviolet curable composition particularly excellent.

It is preferable that a fluorine compound (fluorine-based surface treating agent) is a compound having a perfluoroalkyl structure.

With this, it is possible to make the storage stability of the ultraviolet curable composition further excellent, and it is also possible to make the glossiness and the abrasion resistance of the recorded object which is manufactured by using the ultraviolet curable composition further excellent.

Further, a fluorine compound (a fluorine-based surface treating agent) may contain at least one fluorine atom in the molecule, and specific examples of the fluorine compound include, as described above, a short-chain compound, a long-chain compound, a silane compound, a phosphate compound, a carboxylic acid, and a compound having a structure in which at least a portion of a hydrogen atom which is contained in an isocyanate compound is substituted with a fluorine atom (a fluorine-based short-chain compound, a fluorine-based long-chain compound, a fluorine-based silane compound, a fluorine-based phosphate compound, a fluorine-substituted fatty acid, a fluorine-based isocyanate compound, and the like).

The above-described effect is more remarkably exhibited by using the above compound as a surface treating agent. Particularly, it is possible to further efficiently reduce the surface free energy of the constituting particle of the metal powder, the difference of the interfacial energy between the polymerizable compounds is large, and the hydrophobic interaction works more strongly, and thus it is possible to further efficiently arrange the metal powders on the surface of the recorded object. As a result, it is possible to make the glossiness of the recorded object particularly excellent.

Among them, in a case where the fluorine-based silane compound is used, the recorded object which is manufactured by using the ultraviolet curable composition exhibits particularly excellent durability, and weather resistance, and it is possible to maintain the hardness of the film for a longer period of time.

In addition, the surface treating agent of a phosphate compound is strong for an acid, and thus when the fluorine-based phosphate compound is used, even under acidic environment, the recorded object which is manufactured by using the ultraviolet curable composition exhibits the durability and the weather resistance.

In addition, when the fluorine-substituted fatty acid (a fluorine-based fatty acid) is used, it is possible to further efficiently perform the surface treatment on the base particle which is formed of precious metals such as gold, silver, and platinum, copper, and aluminum, and to form a small functional group and a high crystalline film (a layer which is subjected to the surface treatment), and thus it is possible to efficiently reduce the surface free energy. As a result, it is possible to efficiently arrange smaller particles on the surface of the recorded object, and to further improve the abrasion resistance.

In addition, in a case where the fluorine-based isocyanate compound is used, it is possible to perform further precise surface treatment on the base particle, to make cohesion between the fluorine-based isocyanate compound and the base particle further secure, and thus the durability of the metal powder is improved. Therefore, it is possible to maintain the abrasion resistance for a longer period of time.

As the fluorine-based silane compound, a compound having a chemical structure expressed by formula (3) described below is preferably used.

R¹SiX¹ₐR ²₍₃₋ₐ₎ (3)

(In formula (3), R¹ is a hydrocarbon group in which a part or the whole of hydrogen atoms are substituted with the fluorine atom, X¹ is a hydrolysis group, an ether group, a chloro group, or a hydroxyl group, R² is an alkyl group having 1 to 4 carbon atoms, and a is an integer in a range of 1 to 3.)

With this, it is possible to make the storage stability and the discharge stability by the ink jet method of the ultraviolet curable composition particularly excellent, and to make the glossiness and the abrasion resistance the printing unit (the printed pattern) of the recorded object which is manufactured by using the ultraviolet curable composition particularly excellent.

Examples of R¹ in formula (3) in which a part or the whole of hydrogen atoms are substituted with a fluorine atom include an alkyl group, an alkenyl group, an aryl group, and an aralkyl group, and at least a portion of hydrogen atoms (a hydrogen atom which is not substituted with a fluorine atom) included in a molecular structure may be substituted with an amino group, a carboxyl group, a hydroxyl group, and a thiol group, or in the carbon chain, hetero atoms such as -O-, -S-, -NH-, and -N =, or an aromatic ring such as benzene may be inserted. Specific example of R¹ include a phenyl group, a benzyl group, a phenethyl group, a hydroxyphenyl group, a chlorophenyl group, an aminophenyl group, a naphthyl group, an anthranyl group, a pyrenyl group, a thienyl group, a pyrrolyl group, a cyclohexyl group, a cyclohexenyl group, a cyclopentyl group, a cyclopentenyl group, a pyridinyl group, a methyl group, an ethyl group, n-propyl, isopropyl, n-butyl, isobutyl, sec-butyl, a tert-butyl group, an octadecyl group, a n-octyl group, a chloromethyl group, a methoxyethyl group, a hydroxyethyl group, an aminoethyl group, a cyano group, a mercaptopropyl group, a vinyl group, an allyl group, an acryloxyethyl group, a methacryloxyethyl group, a glycidoxypropyl group, and an acetoxy group, in which a part or the whole of hydrogen atoms are substituted with the fluorine atom.

The fluorine-based silane compound having a perfluoroalkyl structure (CₙF₂ₙ₊₁) can be expressed by formula (4) described below.

CₙF₂ₙ₊₁(CH₂)ₘSiX¹ₐR²₍₃₋ₐ₎ (4)

(In formula (4), X¹ is a hydrolysis group, an ether group, a chloro group, or a hydroxyl group, R² is an alkyl group having 1 to 4 of carbon atoms, and n is an integer in a range of 1 to 14, m is an integer in a range of 2 to 6, and a is an integer in a range of 1 to 3.)

Specific examples of a compound having such a structure includes CF₃-CH₂CH₂-Si(OCH₃)₃, CF₃(CF₂)₃-CH₂CH₂-Si(OCH₃)₃, CF₃(CF₂)₅-CH₂CH₂-Si(OCH₃)₃, CF₃(CF₂)₅-CH₂CH₂-Si(OC₂H₅)₃, CF₃(CF₂)₇-CH₂CH₂-Si(OCH₃)₃, CF₃(CF₂)₁₁-CH₂CH₂-Si(OC₂H₅)₃, CF₃(CF₂)₃-CH₂CH₂-Si(CH₃)(OCH₃)₂, CF₃(CF₂)₇-CH₂CH₂-Si(CH₃)(OCH₃)₂, CF₃(CF₂)₈-CH₂CH₂-Si(CH₃)(OC₂H₅)₂, and CF₃(CF₂)₈-CH₂CH₂-Si(C₂H₅)(OC₂H₅)₂.

In addition, as a fluorine-based silane compound, it is possible to use the compound having a perfluoroalkyl ether structure (CₙF₂ₙ₊₁O) instead of the above-described perfluoroalkyl structure (CₙF₂ₙ₊₁).

Examples of the fluorine-based silane compound having the perfluoroalkyl ether structure (CₙF₂ₙ₊₁O) include a compound expressed in formula (5) described below. CₚF₂ₚ₊₁O(CₚF₂ₚO)ᵣ(CH₂)ₘSiX¹ₐR²₍₃₋ₐ₎ (5)

(In formula (5), X¹ is a hydrolysis group, an ether group, a chloro group, or a hydroxyl group, R² is an alkyl group having 1 to 4 of carbon atoms, and p is an integer in a range of 1 to 4, r is an integer in a range of 1 to 10, m is an integer in a range of 2 to 6, and a is an integer in a range of 1 to 3.)

Specific examples of a compound having such a structure includes CF₃O(CF₂O)₆-CH₂CH₂-Si(OC₂H₅)₃, CF₃O(C₃F₆O)₄-CH₂CH₂-Si(OCH₃)₃, CF₃O(C₃F₆O)₂(CF₂O)₃-CH₂CH₂-Si(OCH₃)₃, CF₃O(C₃F₆O)₈-CH₂CH₂-Si(OCH₃)₃, CF₃O(C₄F₉O)₅-CH₂CH₂-Si(OCH₃)₃, CF₃O(C₄F₉O)₅-CH₂CH₂-Si(CH₃)(OC₂H₅)₂, and CF₃O(C₃F₆O)₄-CH₂CH₂-Si(C₂H₅)(OCH₃)₂.

As a fluorine-based phosphate compound, it is possible to use a phosphate compound having at least one fluorine atom in the molecule.

Particularly, the fluorine-based phosphate compound is preferably a compound having a chemical structure expressed in formula (6) described below.

PORₙ(OH)₃₋ₙ (6)

(In formula (6), R represents CF₃(CF₂)ₘ-, CF₃(CF₂)ₘ(CH₂)ₗ-, CF₃(CF₂)ₘ(CH₂O)ₗ-, CF₃(CF₂)ₘ(CH₂CH₂O)ₗ-, CF₃(CF₂)ₘO-, or CF₃(CF₂)ₘ(CH₂)ₗO-, n is an integer in a range of 1 to 3, m is an integer in a range of 2 to 18, and I is an integer in a range of 1 to 18)

With this, it is possible to make the storage stability and the discharge stability by the ink jet method of the ultraviolet curable composition particularly excellent, and to make the glossiness and the abrasion resistance the printing unit of the recorded object which is manufactured by using the ultraviolet curable composition particularly excellent.

In formula (6), m is preferably an integer in a range of 3 to 14, and is more preferably an integer in a range of 4 to 12. With this, the above-described effect is more remarkably exhibited.

In addition, in formula (6), I is preferably an integer in a range of 1 to 14, and is more preferably an integer in a range of 1 to 10. With this, the above-described effect is more remarkably exhibited.

As the fluorine-substituted fatty acid (fluorine-based fatty acid), a fatty acid containing at least one fluorine atom in the molecule can be used.

Examples of the fluorine-substituted fatty acid include CF₃-CH₂CH₂-COOH, CF₃(CF₂)₃-CH₂CH₂-COOH, CF₃(CF₂)₅-CH₂CH₂-COOH, CF₃(CF₂)₆-CH₂CH₂-COOH, CF₃(CF₂)₇-CH₂CH₂-COOH, CF₃(CF₂)₉-CH₂CH₂-COOH and esters thereof. Among them, CF₃(CF₂)₅-CH₂CH₂-COOH is preferably used.

With this, it is possible to form a dense film by firmly bonding the fluorine-substituted fatty acid and a metal atom forming the base particle such as silicon, aluminum, magnesium, and titanium through a dehydration reaction due to heating, and thus it is possible to efficiently decrease the surface energy of the particle.

As the fluorine-based isocyanate compound, it is possible to use a compound having at least one isocyanate group and at least one fluorine atom in the molecule.

As the fluorine-based isocyanate compound, for example, it is possible to use a compound having a chemical structure expressed by formula (7) described below.

RfNCO (7)

(In formula (7), Rf is CF₃(CF₂)ₘ-, or CF₃(CF₂)ₘ(CH₂)ₗ-, m is an integer in a range of 2 to 18, and I is an integer in a range of 1 to 18.)

With this, it is possible to make the storage stability and the discharge stability by the ink jet method of the ultraviolet curable composition particularly excellent. In addition, in the recorded object which is manufactured by using the ultraviolet curable composition, it is possible to preferably arrange (leafing) metal powders in the vicinity of an outer surface of the printing unit, and to make the glossiness of the printing unit of the manufactured recorded object particularly excellent. Further, it is possible to make the abrasion resistance of the printing unit of the manufactured recorded object particularly excellent.

In formula (7), m is preferably an integer in a range of 3 to 14, and is more preferably an integer in a range of 4 to 12. With this, the above-described effect is more remarkably exhibited.

In addition, in formula (7), I is preferably an integer in a range of 1 to 14, and is more preferably an integer in a range of 1 to 10. With this, the above-described effect is more remarkably exhibited.

Further, the metal powder may be subjected to the surface treatment by using a plurality of the surface treating agents. In such a case, the same particle may be subjected to the surface treatment by using the plurality of the surface treating agents, and the metal powder may include a plurality of particles which are all or respectively subjected to the surface treatment by using the different surface treating agents.

The above-described surface treating agent may be directly treated on the base particle, but it is preferable that the base particle is treated with an acid or a base, and then the base particle is treated with the surface treating agent. With this, it is possible to more reliably perform modifications by chemical bonding through the surface treating agent on the surface of the base particle, and thus the above-described effect can be more remarkably exhibited. Examples of an acid include a protonic acid such as a hydrochloric acid, a sulfuric acid, a phosphoric acid, a nitric acid, an acetic acid, a carbonic acid, a formic acid, a benzoic acid, a chlorous acid, a hypochlorous acid, a sulfurous acid, a hyposulfurous acid, a nitrous acid, a hypophosphorous acid, a phosphorous acid, and a hypophosphorous acid. Among them, a hydrochloric acid, a phosphoric acid, and an acetic acid are preferably used. On the other hand, examples of the hydrochloric acid include sodium hydroxide, potassium hydroxide, and calcium hydroxide. Among them, sodium hydroxide and potassium hydroxide are preferably used.

In addition, the surface treatment on the base particle by using the surface treating agent may be performed, for example, by containing the surface treating agent in a liquid when the base particle is formed by pulverizing a metal film formed by using a vapor deposition method in the liquid as described above.

With this, the surface treatment progresses with the base particles which are uniformly formed, and thus it is possible to perform the surface treatment on the cleaned surface which is pulverized, and to make quality and productivity of the metal powder and the ultraviolet curable composition particularly excellent. In addition, when using a compound as described above as the surface treating agent (particularly, when using the fluorine-based phosphate compound), the aggregation of the base particles which are subjected to the surface treatment is properly suppressed, and thus the fluidity of a solution in which the base particles are dispersed is improved. Therefore, it is possible to further efficiently perform the pulverization on the film, to further efficiently obtain the metal powder which satisfies the condition of the fine particle size as described above, and to make the quality and productivity of the metal powder and the ultraviolet curable composition further excellent.

In a case where the particle is subjected to a plurality of types of surface treatments, the surface treatment may be performed by dividing a plurality of steps corresponding to each surface treating agent, or in the same step, the surface treatment may be performed by the plurality of types of surface treating agents.

The particle forming metal powder may be of any shape, for example, a spherical shape, a spindle shape, a needle shape; however, a scaly shape is preferably used.

With this, it is possible to arrange metal powders on the recording medium to which the ultraviolet curable composition is imparted such that the main surface of the particle is formed along the surface shape of the recording medium, to efficiently exhibit the glossiness which originally belongs to the metal material forming the metal powder, to make the glossiness and the sophisticated feelings of the pattern (the printing unit) in the obtained recorded object particularly excellent, and to make the abrasion resistance of the recorded object particularly excellent. In addition, in the configuration that the surface treatment is not performed by using the above-described the surface treating agent, in a case where the particle forming the metal powder is formed into the scaly shape, it is likely that the storage stability and the discharge stability of the ultraviolet curable composition is deteriorated, whereas in a case where the particle forming the metal powder has a predetermined average particle size and is subjected to the surface treatment by using the surface treating agent, it is possible to reliably prevent the occurrence of such a problem even though the particle forming the metal powder is formed into the scaly shape. That is, in a case where the particle forming the metal powder has a predetermined average particle size, is subjected to the surface treatment by using the surface treating agent, and is formed into the scaly shape, an effect resulting from this acts on the discharge stability, and thus it is possible to manufacture the recorded object particularly excellent in the glossiness and the sophisticated feelings with particularly excellent productivity.

In the invention, the scaly shape means a shape in which a projected area when the particle is observed at a predetermined angle (in a plan view) is larger than an area when the particle is observed at an angle orthogonal to the observation direction, such as a flat shape or a curved plate shape. Particularly, a ratio (S₁/S₀) of an area S₁[µm²], which is the maximum projected area when the particle is observed in a plan view, to an area S₀ [µm²], which is the maximum area of the projected areas obtained when observed from the direction orthogonal to the observation direction, is preferably equal to or greater than 2, more preferably equal to or greater than 5, and still more preferably equal to or greater than 8. These values can be obtained by optionally performing the observation for ten particles, and employing the average value of the values calculated for ten particles.

When the particle forming the metal powder is formed into the scaly shape, the average thickness of the particle is preferably in a range of 10 nm to 80 nm, and is more preferably in a range of 20 nm to 70 nm.

For example, the ratio (S₁/S₀) and the thickness can be observed using a transmission electron microscope and a scanning electron microscope, and specific examples include a transmission electron microscope (TEM, JOEL JEM-2000EX), a field emission scanning electron microscope (FE-SEM, Hitachi S-4700), a scanning transmission electron microscope (STEM, "HD-2000" manufactured by Hitachi High-Technologies Corporation) and the like. The thickness means an average thickness and is an average value obtained such that the measurement is performed 10 times.

With this, the effect resulting from the particle being formed into the scaly shape as described above is more remarkably exhibited.

The volume average particle size (D₅₀) of the metal powder is in a range of 0.2 µm to 0.64 µm.

The metal powder is subjected to the surface treatment, and has a predetermined average particle size, and thus the excellent effect as described above is obtained.

In contrast, when the volume average particle size of the metal powder is less than the lower limit, the aggregation of metal powder is likely to occur, and the storage stability of the ultraviolet curable composition is remarkably deteriorated in the ultraviolet curable composition. In addition, due to the occurrence of the aggregation, involuntary color shading in the printing unit which is formed by using the ultraviolet curable composition is likely to occur.

In addition, when the volume average particle size of the metal powder is beyond the above upper limit value, the discharge stability of the ultraviolet curable composition by the ink jet method is rapidly deteriorated.

The volume average particle size (D₅₀) of the metal powder may be in a range of 0.2 µm to 0.64 µm, is preferably in a range of 0.25 µm to 0.60 µm, and is more preferably in a range of 0.30 µm to 0.55 µm.

With this, the above-described effect is more remarkably exhibited.

Meanwhile, in the invention, the volume average particle size means a median size of a volume distribution which is obtained by measuring a particle dispersion through a laser diffraction method and a scattering method, and is a size of the particle which exactly indicates 50% of the median cumulative in a case where the measuring results for a plurality of particles are indicated as accumulation of abundance ratio for each size (the particle size). Examples of the measurement device include a laser diffraction scattering particle size analyzer, Microtrack MT-3000 (manufactured by Nikkiso Co., Ltd.). The volume average particle diameters (D50) in the below-described Examples are values measured by the above-described Microtrack MT-3000.

The fine particle size (D₁₀) from the fine particle side of the metal powder at a volume cumulative distribution rate 10% is preferably in a range of 0.10 µm to 0.40 µm, is more preferably in a range 0.15 µm to 0.35 µm, and is still more preferably in a range of 0.20 µm to 0.30 µm.

With this, it is possible to make the particle size distribution of the metal powder further sharp, and it is possible to make the discharge stability of the ultraviolet curable composition by the ink jet method particularly excellent.

The fine particle size (D₉₀) from the fine particle side of the metal powder at a volume cumulative distribution rate 90% is preferably in a range of 0.40 µm to 1.10 µm, is more preferably in a range of 0.45 µm to 0.95 µm, and is still more preferably in a range of 0.50 µm to 0.85 µm.

With this, it is possible to make the particle size distribution of the metal powder further sharp, and it is possible to make the discharge stability of the ultraviolet curable composition by the ink jet method particularly excellent.

The half-value width in the particle size distribution of the metal powder (the distance between D25 and D75) is preferably equal to or less than 0.45 µm, is more preferably equal to or less than 0.40 µm, and still more preferably equal to or less than 0.35 µm.

With this, it is possible to make the particle size distribution of the metal powder further sharp, and it is possible to make the discharge stability of the ultraviolet curable composition by the ink jet method particularly excellent.

In addition, in the ultraviolet curable composition of the invention, a compound in which the volume average particle size of the metal powder has a value within the above predetermined range and which is subjected to the surface treatment may be contained as the constituting particle of the metal powder, and a compound which is not subjected to the surface treatment may be contained as a portion of the constituting particle of the metal powder; however, in such a case, the content of constituting particles which are subjected to the surface treatment is preferably equal to or greater than 90 mass%, is more preferably equal to or greater than 95 mass%, and is still more preferably equal to or greater than 99 mass%, with respect to the entire metal powder.

With this, the above-described effect is more remarkably exhibited.

The content of the metal powder (including particles not subjected to surface treatment) in the ultraviolet curable composition is preferably in a range of 0.9 mass% to 29 mass%, and is more preferably in a range of 1.2 mass% to 19.3 mass%.

With this, it is possible to make the discharge stability of the ultraviolet curable composition by the ink jet method particularly excellent, and to make the glossiness of the printing unit formed by using the ultraviolet curable composition particularly excellent. Polymerizable compound

The polymerizable compound is a component which is polymerized by being irradiated with an ultraviolet ray, and cured. By containing such a component, it is possible to make abrasion resistance, water resistance, and solvent resistance of the recorded object which is manufactured by using the ultraviolet curable composition excellent.

It is preferable that the polymerizable compound is in a liquid state, and functions as a dispersion medium for dispersing the metal powder in the ultraviolet curable composition.

With this, it is not necessary to use a dispersion medium which is removed (evaporated) in the manufacturing process of the recorded object and also it is not necessary to provide a step of removing a dispersion medium in the manufacture of the recorded object, and thus it is possible to make productivity of the recorded object particularly excellent. In addition, as a dispersion medium, it is not necessary to use a dispersion medium which is generally used as an organic solvent, and thus it is possible to prevent the problem of the volatile organic compound (VOC). In addition, by containing the polymerizable compound, it is possible to make adhesive properties of the printing unit which is formed by using the ultraviolet curable composition excellent with respect to various types of the recording media (the base materials). That is, by containing the polymerizable compound, the ultraviolet curable composition is excellent in the media correspondence.

The polymerizable compound may be a component which is polymerized by being irradiated with an ultraviolet ray, and it is possible to use, for example, various monomers, various oligomers (containing dimers, trimers, and the like), and the like; however, it is preferable that the ultraviolet curable composition contains at least a monomer component as a polymerizable compound. A monomer is a component which generally has a low viscosity as compared with an oligomer component and the like, and thus has an advantage in terms of particularly excellent discharge stability of the ultraviolet curable composition.

Particularly, it is preferable that the ultraviolet curable composition contains a monomer having an alicyclic structure as the polymerizable compound.

With the ultraviolet curable composition containing a monomer having an alicyclic structure and the metal powder (the metal powder which is subjected to the surface treatment by using the surface treating agent as described above), it is possible to make the storage stability and the discharge stability of the ultraviolet curable composition particularly excellent, and to make the glossiness and the abrasion resistance of the printing unit of the recorded object which is manufactured by using the ultraviolet curable composition particularly excellent.

Examples of a monomer having an alicyclic structure includes one or two or more types selected from the group consisting of tris(2-(meth)acryloyloxyethyl) isocyanurate, dicyclopentenyl oxyethyl (meth)acrylate, adamantyl (meth)acrylate, γ-butyrolactone (meth)acrylate, N-vinyl caprolactam, N-vinyl pyrrolidone, pentamethyl piperidyl (meth)acrylate, tetramethyl piperidyl (meth)acrylate, 2-methyl-2-adamantyl (meth)acrylate, 2-ethyl-2-adamantyl (meth)acrylate, lactone mevalonate (meth)acrylate, dimethylol tricyclodecane (meth)acrylate, dimethylol dicyclopentane di(meth)acrylate, dicyclopentenyl (meth)acrylate, dicyclopentanyl (meth)acrylate, isobornyl (meth)acrylate, cyclohexyl (meth)acrylate, (meth)acryloyl morpholine, tetrahydrofurfuryl (meth)acrylate, phenyl glycidyl ether (meth)acrylate, EO-modified hydrogenated bisphenol A di(meth)acrylate, di(meth)acrylated isocyanurate, tri(meth)acrylated isocyanurate, tris(2-acryloyloxyethyl)isocyanurate, dicyclopentenyl oxyethyl acrylate, adamantyl acrylate, γ-butyrolactone acrylate, N-vinyl caprolactam, N-vinyl pyrrolidone, pentamethyl piperidyl acrylate, tetramethyl piperidyl acrylate, 2-methyl-2-adamantyl acrylate, 2-ethyl-2-adamantyl acrylate, mevalonic acid lactone acrylate, dimethylol tricyclodecane diacrylate, dimethylol di-cyclopentane diacrylate, dicyclopentenyl acrylate, dicyclopentanyl acrylate, isobornyl acrylate, cyclohexyl acrylate, acryloyl morpholine, tetrahydrofurfuryl acrylate, cyclohexane spiro-2-(1,3-dioxolan-4-yl) methyl acrylate, and (2-methyl-2-ethyl-1,3-dioxolane-4-yl) methyl acrylate.

With this, it is possible to make the glossiness and the sophisticated feelings of the recorded object which is manufactured by using the ultraviolet curable composition further excellent. In addition, it is possible to make the storage stability and the discharge stability of the ultraviolet curable composition further excellent.

Among them, in a case where the monomer contains one or two or more types selected from the group consisting of acryloyl morpholine, tetrahydrofurfuryl acrylate, γ-butyrolactone acrylate, N-vinyl caprolactam, and N-vinylpyrrolidone, it is possible to make the dispersion stability of metal powder in the ultraviolet curable composition and the discharge stability by the ink jet method further excellent, and in the recorded object which is manufactured by using the ultraviolet curable composition, it is possible to further preferably arrange metal powder in the vicinity of the outer surface of the printing unit, and thus it is possible to make the glossiness of the obtained recorded object further excellent.

In addition, from a view point of further improving the curing rate of the ultraviolet curable composition when being irradiated with an ultraviolet ray and the productivity of the recorded object, the monomer preferably contains one or two or more types selected from the group consisting of tris(2-acryloyloxyethyl) isocyanurate, dicyclopentenyl oxyethyl acrylate, γ-butyrolactone acrylate, N-vinyl pyrrolidone, dimethylol tricyclodecane diacrylate, dimethylol di-cyclopentane diacrylate, dicyclopentenyl acrylate, dicyclopentanyl acrylate, acryloyl morpholine, and tetrahydrofurfuryl acrylate, more preferably contains acryloyl morpholine, and (or) γ-butyrolactone acrylate, and still more preferably contains γ-butyrolactone acrylate.

In addition, in a case where the monomer contains one or two or more types selected from the group consisting of cyclohexyl acrylate, tetrahydrofurfuryl acrylate, and benzyl acrylate, it is possible to make the flexibility of the printing unit which is formed by curing the ultraviolet curable composition further excellent.

Further, from a view point of further improving the abrasion resistance of the printing unit which is formed by curing the ultraviolet curable composition, the monomer preferably contains one or two or more types selected from the group consisting of tris(2-acryloyloxyethyl) isocyanurate, dicyclopentenyl oxyethyl acrylate, adamantyl acrylate, γ-butyrolactone acrylate, N-vinyl caprolactam, N-vinyl pyrrolidone, dimethylol tricyclodecane diacrylate, dimethylol dicyclopentane diacrylate, dicyclopentenyl acrylate, dicyclopentanyl acrylate, isobornyl acrylate, and acryloyl morpholine.

In addition, in a case where the monomer contains one or two or more types selected from the group consisting of γ-butyrolactone acrylate, N-vinyl caprolactam, N-vinyl pyrrolidone, isobornyl acrylate, and tetrahydrofurfuryl acrylate, the shrinkage rate at the time of curing the ultraviolet curable composition becomes smaller, and thereby it is possible to further efficiently prevent the glossiness from being deteriorated caused by the occurrence of involuntary wrinkle in the printing unit which is formed by curing the ultraviolet curable composition.

The content of a monomer having an alicyclic structure in the ultraviolet curable composition is preferably in a range of 40 mass% to 90 mass%, is more preferably in a range of 50 mass% to 88 mass%, and is still more preferably in a range of 55 mass% to 85 mass%.

With this, it is possible to make the dispersion stability of the metal powder particularly excellent, and to obtain particularly excellent discharge stability for a long period of time. Particularly, even in a case where the ultraviolet curable composition does not contain a dispersant, the above-described excellent effects can be obtained. In addition, the ultraviolet curable composition may contain two or more types of compounds as a monomer having an alicyclic structure. In this case, the total content thereof is preferably a value within the above range.

In the monomer having an alicyclic structure, the number of constituting atoms of a ring structure formed by a covalent bond is preferably equal to or greater than 5, and is more preferably equal to or greater than 6.

With this, it is possible to make the storage stability of the ultraviolet curable composition particularly excellent.

The ultraviolet curable composition may contain the monofunctional monomer containing a hetero atom in the alicyclic structure (monofunctional monomer having a heterocycle that does not exhibit aromaticity) as a monomer having an alicyclic structure.

With this, it is possible to make the dispersion stability of the metal powder particularly excellent, and to obtain particularly excellent discharge stability for a long period of time. Particularly, even in a case where the ultraviolet curable composition does not contain a dispersant, the above-described excellent effects can be obtained. Examples of such a monofunctional monomer include tris(2-(meth)acryloyl oxyethyl) isocyanurate, γ-butyrolactone (meth)acrylate, N-vinyl caprolactam, N-vinyl pyrrolidone, pentamethyl piperidyl (meth)acrylate, tetramethyl piperidyl (meth)acrylate, mevalonate lactone (meth)acrylate, (meth)acryloyl morpholine, and tetrahydrofurfuryl (meth)acrylate.

The content of monofunctional monomer (the monofunctional monomer containing a hetero atom in the alicyclic structure) in the ultraviolet curable composition is preferably in a range of 10 mass% to 80 mass%, and is more preferably in a range of 15 mass% to 75 mass%.

With this, it is possible to suppress the cure shrinkage, and thus it is possible to preferably use the ultraviolet curable composition to manufacture the recorded object including the pattern (the printing unit) which has less scattering and is further excellent in the glossiness. In addition, the ultraviolet curable composition may contain two or more types of compounds as a monofunctional monomer containing a hetero atom in the alicyclic structure. In this case, it is preferable that the sum total of these contents is within the above range.

In the invention, the polymerizable compound forming the ultraviolet curable composition may contain a monomer that does not contain an alicyclic structure.

Examples of such a monomer (the monomer that does not contain the alicyclic structure) includes phenoxyethyl (meth)acrylate, benzyl (meth)acrylate, (meth)acrylic acid 2-(2-vinyloxy ethoxy)ethyl, dipropylene glycol di(meth) acrylate, tripropylene glycol di(meth)acrylate, 2-hydroxy-3-phenoxy propyl (meth)acrylate, and 4-hydroxybutyl (meth)acrylate lauryl (meth)acrylate, 2-methoxyethyl (meth)acrylate, isooctyl (meth)acrylate, stearyl (meth)acrylate, 2-ethoxyethyl (meth)acrylate, 1H,1H,5H-octafluoropentyl (meth)acrylate, 2-hydroxyethyl (meth)acrylate, 2-hydroxypropyl (meth)acrylate, isobutyl (meth)acrylate, t-butyl (meth)acrylate, ethyl carbitol (meth)acrylate, 2,2,2-trifluoroethyl (meth)acrylate, 2,2,3,3-tetrafluoro propyl (meth)acrylate, methoxy triethylene glycol (meth)acrylate, PO-modified nonylphenol (meth)acrylate, EO-modified nonylphenol (meth)acrylate, EO-modified 2-ethylhexyl (meth)acrylate, phenoxy diethylene glycol (meth)acrylate, EO modified phenol (meth)acrylate, EO-modified cresol (meth)acrylate, methoxypolyethylene glycol (meth)acrylate, dipropylene glycol (meth)acrylate, 2-n-butyl-2-ethyl-1,3-propanediol di(meth)acrylate, tetraethylene glycol di(meth)acrylate, 1,9-nonane diol di(meth) acrylate, 1,4-butanediol di(meth)acrylate, bisphenol A EO-modified di(meth)acrylate, 1,6-hexanediol di(meth)acrylate, polyethylene glycol 200 di(meth)acrylate, polyethylene glycol 300 di(meth)acrylate, neopentyl glycol hydroxy pivalate closed (meth)acrylate, 2-ethyl-2-butyl-propanediol di(meth)acrylate, polyethylene glycol 400 di(meth)acrylate, polyethylene glycol 600 di(meth)acrylate, polypropylene glycol di(meth)acrylate, PO-modified bisphenol A di(meth)acrylate, trimethylolpropane tri(meth)acrylate, pentaerythritol tri(meth)acrylate, trimethylolpropane EO-modified tri(meth)acrylate, glycerin PO added tri(meth)acrylate, tris(meth)acryloyloxyethyl phosphate, pentaerythritol tetra (meth)acrylate, PO-modified trimethylolpropane tri(meth)acrylate, 2-(meth)acryloyloxyethyl phthalate, 3 (meth)acryloyloxy acrylate, w-carboxy (meth)acryloyloxyethyl phthalate, ditrimethylolpropane tetra(meth)acrylate, dipentaerythritol penta or hexa(meth)acrylate, and dipentaerythritol hexa (meth)acrylate. Among them, a monomer containing one or two or more types selected from the group consisting of phenoxyethyl acrylate, benzyl acrylate, acrylic acid 2-(2-vinyloxy ethoxy)ethyl, dipropylene glycol diacrylate, tripropylene glycol diacrylate, 2-hydroxy-3-phenoxy propyl acrylate, and 4-hydroxybutyl acrylate is preferably used.

With the ultraviolet curable composition containing such a monomer that does not have an alicyclic structure in addition to a monomer having an alicyclic structure, it is possible to make the storage stability and the discharge stability of the ultraviolet curable composition excellent, to make the reactivity of the ultraviolet curable composition after being discharged by the ink jet method particularly excellent, to make the productivity of the recorded object particularly excellent, and to make the abrasion resistance and the like of the formed pattern particularly excellent.

Among them, in a case where the monomer contains phenoxyethylacrylate, in the recorded object which is manufactured by using the ultraviolet curable composition, it is possible to further preferably arrange the metal powders in the vicinity of the outer surface of the printing unit, and make the glossiness of the obtained recorded object further excellent.

In addition, in a case where the monomer contains 2-acrylic acid (2-vinyloxy ethoxy)ethyl, it is possible to make the curing rate of the ultraviolet curable composition at the time of being irradiated with an ultraviolet ray, and to make the productivity of the recorded object further excellent.

In addition, in a case where the monomer contains phenoxyethylacrylate, and (or), 2-hydroxy-3-phenoxy propyl acrylate, it is possible to make the flexibility of the printing unit which is formed by curing the ultraviolet curable composition further excellent.

In addition, from a view point of further improving the abrasion resistance of the printing unit which is formed by curing the ultraviolet curable composition, the monomer preferably contains one or two or more types selected from the group consisting of 2-acrylic acid (2-vinyloxy ethoxy)ethyl, dipropylene glycol diacrylate, and tripropylene glycol diacrylate, and more preferably contains 2-acrylic acid (2-vinyloxy ethoxy)ethyl.

Further, in a case where the monomer contains phenoxyethylacrylate, the shrinkage rate at the time of curing the ultraviolet curable composition becomes smaller, and thereby it is possible to further efficiently prevent the glossiness from being deteriorated caused by the occurrence of involuntary wrinkle in the printing unit which is formed by curing the ultraviolet curable composition.

The content of the monomer other than the monomer having an alicyclic structure in the ultraviolet curable composition is preferably in a range of 5 mass% to 50 mass%, and is more preferably in a range of 10 mass% to 40 mass%.

With this, it is easier to adjust the curing rate, the flexibility, the shrinkage rate at the time of curing, or the like of the ultraviolet curable composition. In addition, the ultraviolet curable composition may contain two or more types of compounds as a monomer that does not contain the alicyclic structure. In this case, it is preferable that the sum total of these contents is within the above range.

The ultraviolet curable composition may contain as the polymerizable compound, an oligomer (containing dimers, trimers, and the like), a prepolymer, and the like in addition to a monomer. As the oligomer and the prepolymer, for example, it is possible to use the oligomer and the prepolymer which have the above-described monomer as a constituting component. It is particularly preferable that the ultraviolet curable composition contains a polyfunctional oligomer.

With this, it is possible to make the storage stability and the discharge stability by the ink jet method of the ultraviolet curable composition excellent, and to make the abrasion resistance of the formed pattern particularly excellent. As the oligomer, a urethane oligomer in which a repeating structure is urethane, and an epoxy oligomer in which a repeating structure is epoxy are preferably used.

The content of the polymerizable compound in the ultraviolet curable composition is preferably in a range of 70 mass% to 99 mass%, and is more preferably in a range of 80 mass% to 98 mass%.

With this, it is possible to make the storage stability, the discharge stability, and the curability of the ultraviolet curable composition further excellent, and it is also possible to make the glossiness, the abrasion resistance, and the like of the recorded object which is manufactured by using the ultraviolet curable composition further excellent. In addition, the ultraviolet curable composition may contain two or more types of compounds as the polymerizable compound. In this case, it is preferable that the sum total of these contents is within the above range.

### Substance A

In addition, it is preferable that the ultraviolet curable composition of the invention contains a substance A having a partial structure expressed by formula (8) described below. 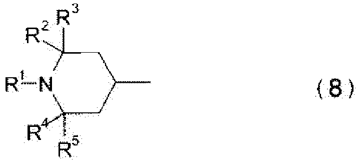 (In formula (8), R¹ represents an oxygen atom, a hydrogen atom, a hydrocarbon group, an alkoxyl group and each of R², R³, R⁴, and R⁵ independently represents a hydrogen atom or a hydrocarbon group.)

When the ultraviolet curable composition contains the substance A having such a chemical structure with the metal powder which is subjected to the surface treatment and a monomer having an alicyclic structure, it is possible to make the storage stability, the curability, and the discharge stability by the ink jet method of the ultraviolet curable composition particularly excellent. In addition, in the recorded object which is manufactured by using the ultraviolet curable composition, it is possible to further efficiently exhibit the glossiness and the sophisticated feelings which originally belong to the metal material forming the metal powder, to make the glossiness and the abrasion resistance of the printing unit particularly excellent, and to make the durability of the recorded object particularly excellent.

In formula (8), R¹ is preferably an oxygen atom, a hydrogen atom, a hydrocarbon group, or an alkoxy group (which is obtained by bonding a chain or alicyclic hydrocarbon group to an oxygen atom), and is particularly preferably a hydrogen atom, a methyl group, or an octyl group.

With this, it is possible to make the storage stability and the discharge stability of the ultraviolet curable composition further excellent, and it is also possible to make the glossiness and the abrasion resistance of the printing unit which is manufactured by using the ultraviolet curable composition further excellent.

In addition, in formula (8), each of R² to R⁵ may be independently a hydrogen atom or a hydrocarbon group; however, each of them is preferably an alkyl group having 1 to 3 carbon atoms, and is more preferably a methyl group.

With this, it is possible to make the storage stability and the discharge stability of the ultraviolet curable composition further excellent, and it is also possible to make the glossiness and the abrasion resistance of the printing unit which is manufactured by using the ultraviolet curable composition further excellent.

The content of substance A in the ultraviolet curable composition is preferably in a range of 0.1 mass% to 5.0 mass%, and is more preferably in a range of 0.5 mass% to 3.0 mass%.

With this, it is possible to make the storage stability, the discharge stability, and the curability of the ultraviolet curable composition further excellent, and it is also possible to make the glossiness, the abrasion resistance, and the like of the recorded object which is manufactured by using the ultraviolet curable composition further excellent. In addition, the ultraviolet curable composition may contain two or more types of compounds as the substance A. In this case, it is preferable that the sum total of these contents is within the above range.

In a case where the content of the substance A is set to be X_{A} [mass%], and the content of the metal powder is set to be X_{M} [mass%], it is preferable to satisfy a relationship expressed by 0.01 ≤ X_{A}/X_{M} ≤ 0.8, and it is more preferable to satisfy a relationship expressed by 0.05 ≤ X_{A}/X_{M} ≤ 0.4.

When such a relationship is satisfied, it is possible to make the storage stability and the discharge stability of the ultraviolet curable composition further excellent, and it is also possible to make the glossiness and the abrasion resistance of the printing unit which is formed by using the ultraviolet curable composition further excellent.

### Dispersant

The ultraviolet curable composition of the invention may contain a dispersant.

With this, it is possible to make the dispersion stability of the metal powder in the ultraviolet curable composition further excellent, and it is also possible to make the storage stability of the ultraviolet curable composition further excellent.

Particularly, the ultraviolet curable composition of the invention may contain those having a polymer structure with a basic group (hereinafter, referred to as a "basic polymer dispersant") as a dispersant.

With this, it is possible to make the storage stability of the ultraviolet curable composition further excellent.

In addition, the basic polymer dispersant exhibits basicity, and the specific molecular weight thereof is not particularly limited as long as the basic polymer dispersant has a polymer structure.

The polymer structure forming a basic polymer dispersant is not particularly limited; however, examples thereof include an acryl-based polymer structure (including a copolymer), a methacryl-based polymer structure (including a copolymer), a polyurethane-based polymer structure, a hydroxyl group-containing carboxylic acid ester structure, a polyether-based polymer structure, and a silicone-based polymer structure.

An amine value of the basic polymer dispersant is not particularly limited; however, it is preferably in a range of 3 mgKOH/g to 80 mgKOH/g, and is more preferably in a range of 10 mgKOH/g to 70 mgKOH/g.

Specific examples of the basic polymer dispersant which can be used in the invention include DISPERBYK-116 (manufactured by BYK-Chemie Co., Ltd.), DISPERBYK-182 (manufactured by BYK-Chemie Co., Ltd.), DISPERBYK-183(manufactured by BYK-Chemie Co., Ltd.), DISPERBYK-184 (manufactured by BYK-Chemie Co., Ltd.), DISPERBYK-2155 (manufactured by BYK-Chemie Co., Ltd.), DISPERBYK-2164 (manufactured by BYK-Chemie Co., Ltd.), DISPERBYK-108 (manufactured by BYK-Chemie Co., Ltd.), DISPERBYK-112 (manufactured by BYK-Chemie Co., Ltd.), DISPERBYK-198 (manufactured by BYK-Chemie Co., Ltd.), DISPERBYK-2150 (manufactured by BYK-Chemie Co., Ltd.), and PAA-1112 (manufactured by Nitto Boseki Co., Ltd.).

When the ultraviolet curable composition contains the dispersant, the content of the dispersant in the ultraviolet curable composition is preferably equal to or less than 5.0 mass%, and is more preferably in a range of 0.01 mass% to 2.0 mass%.

With this, it is possible to make the glossiness of the recorded object which is manufactured by using the ultraviolet curable composition sufficiently excellent, and to make the storage stability, the discharge stability, and curability of the ultraviolet curable composition further excellent. In addition, the ultraviolet curable composition may contain two or more types of compounds as a basic polymer dispersant. In this case, it is preferable that the sum total of contents of these compounds is within the above range. Meanwhile, if the content of the dispersant is excessively high in the ultraviolet curable composition, the dispersion stability of the metal powder is excessively improved, and thus the internal abundance ratio of the metal powder becomes increased in the ultraviolet curable composition which is imparted to the recording medium, it is difficult to preferably arrange the metal powders in the vicinity of the outer surface of the imparted ultraviolet curable composition, and thus it may be difficult to make the glossiness and the abrasion resistance of the ultimately obtained recorded object (the printing unit) sufficiently excellent.

### Other components

The ultraviolet curable composition of the invention may contain other components other than the above-described components (other components). Examples of other components include a photopolymerization initiator, a slip agent (a leveling agent), a solvent, a polymerization accelerator, a polymerization inhibitor, a penetration enhancer, a wetting agent (a humectant), a colorant, an adhesion promoter, fungicide, an antiseptic agent, an antioxidant, a chelating agent, a thickening agent, and a sensitizer (sensitizing dye).

The photopolymerization initiator gives rise to active species such as radicals and cations due to the irradiation of an ultraviolet ray, and is not particularly limited, as long as it is possible to cause the polymerization reaction of the above-described polymerizable compound to be initiated. As the photopolymerization initiator, a photo-radical polymerization initiator and a photo-cationic polymerization initiator can be used; however, the photo-radical polymerization initiator is preferably used. In a case where the photopolymerization initiator is used, the photopolymerization initiator preferably has an absorption peak in an ultraviolet area.

Examples of the photo-radical polymerization initiator include aromatic ketones, an acyl phosphine oxide compound, an aromatic onium salt compound, an organic peroxide, a thio compound (a thioxanthone compound, a thiophenyl group-containing compound, and the like), a hexaarylbiimidazole compound, a ketoxime ester compound, a borate compound, an azinium compound, a metallocene compound, an active ester compound, a compound having a carbon-halogen bond, and an alkyl amine compound.

Among them, from a view point of solubility and curability with respect to the polymerizable compound, the photo-radical polymerization initiator is preferably at least one selected from the acyl phosphine oxide compound and the thioxanthone compound, and is more preferably used by combining the acyl phosphine oxide compound and the thioxanthone compound.

Specific examples of the photo-radical polymerization initiator include acetophenone, acetophenone benzyl ketal, 1-hydroxycyclohexyl phenyl ketone, 2,2-dimethoxy-2-phenyl acetophenone, xanthone, fluorenone, benzaldehyde, fluorene, anthraquinone, triphenylamine, carbazole, 3-methyl acetophenone, 4-chloro-benzophenone, 4,4'-dimethoxy benzophenone, 4,4'-diamino benzophenone, Michler's ketone, benzoin propyl ether, benzoin ethyl ether, benzyl dimethyl ketal, 1- (4-isopropylphenyl) 2-hydroxy-2-methyl propane-1-one, 2-hydroxy-2-methyl-1-phenyl-propan-1-one, thioxanthone, diethyl thioxanthone, 2-isopropyl thioxanthone, 2-chloro thioxanthone, 2-methyl-1-[4-(methylthio)phenyl]-2-morpholino-propan-1-one, bis(2,4,6-trimethyl benzoyl)-phenyl phosphine oxide, 2,4,6-trimethyl benzoyl-diphenyl-phosphine oxide, 2,4-diethyl thioxanthone, and bis(2,6-dimethoxybenzoyl) 2,4,4-trimethylpentyl phosphine oxide, which can be used by combining one or two or more types selected therefrom.

The content of the photopolymerization initiator in the ultraviolet curable composition is preferably in a range of 0.5 mass% to 10 mass%.

When the content of the photopolymerization initiator is within the above range, the ultraviolet curing rate is sufficiently large and the dissolving remainder of the photopolymerization initiator or coloring derived from the photopolymerization initiator hardly exists.

When the ultraviolet curable composition contains a slip agent, the surface of the recorded object becomes smooth due to a leveling action, and the abrasion resistance is improved.

The slip agent is not particularly limited; however, examples thereof include a silicone surfactant such as polyester-modified silicone or polyether-modified silicone, polyacrylate modified silicone, and polymeric surfactants such as polyacrylate and polyester, and it is preferable to use polyether modified polydimethylsiloxane, polyester-modified polydimethylsiloxane, or polyacrylate-modified polydimethylsiloxane.

In addition, the ultraviolet curable composition of the invention may contain a polymerization inhibitor, even in a case where the polymerization inhibitor is contained, the content of the polymerization inhibitor in the ultraviolet curable composition is preferably equal to or less than 0.6 mass%, and is more preferably equal to or less than 0.2 mass%.

With this, the content of the polymerizable compound can be relatively high in the ultraviolet curable composition, and thus it is possible to make the abrasion resistance and the like of the printing unit which is formed by using the ultraviolet curable composition particularly excellent.

In addition, it is possible that the ultraviolet curable composition of the invention does not contain an organic solvent which is removed (evaporated) in the manufacturing step of the recorded object. With this, it is possible to efficiently prevent the problem of the volatile organic compound (VOC).

The viscosity of the ultraviolet curable composition of the invention measured by using a vibration type viscometer based on JIS Z8809 at room temperature (20°C) is preferably equal to or less than 25 mPa·s, and is preferably in a range of 3 mPa·s to 15 mPa·s.

With this, it is possible to preferably discharge the liquid droplets through the ink jet method.

### Recorded object

Next, a recorded object of the invention will be described.

The recorded object of the invention is manufactured by imparting the above-described ultraviolet curable composition on the recording medium by the ink jet method, and then, being irradiated with an ultraviolet ray.

Such a recorded object is excellent in the glossiness, and has a pattern (a printing unit) in which the occurrence of defects is prevented.

As described above, the ultraviolet curable composition according to the invention contains the polymerizable compound, and is excellent in the adhesive properties with respect to the recording medium. As such, the ultraviolet curable composition of the invention is excellent in the adhesive properties with respect to the recording medium, and thus the recording medium may be any material and may be absorptive or non-absorptive, for example, paper (such as plain paper and ink jet special paper), a plastic material, metal, ceramics, wood, a shell, cotton, polyester, wool such as a natural fiber and a synthetic fiber, and a non-woven fabric can be used. In addition, the shape of the recording medium is not particularly limited; any shape such as sheet-like may be used.

As the liquid droplet discharge type (an ink jet method type), a piezo type, a type of discharging ink by using foam (bubbles) generated by heating ink, and the like can be used; however, from the view point that the ultraviolet curable composition is not easily deteriorated, the piezo type is preferably used.

The discharge of the ultraviolet curable composition through the ink jet method can be performed by using a known liquid droplet discharge apparatus.

The ultraviolet curable composition which is discharged through the ink jet method is cured by the ultraviolet irradiation.

Examples of an ultraviolet source include a mercury lamp, a metal halide lamp, an ultraviolet light-emitting diode (UV-LED), and an ultraviolet laser diode (UV-LD). Among them, in terms of a compact size, long life span, high efficiency, and low cost, the ultraviolet light-emitting diode (UV-LED) and the ultraviolet laser diode (UV-LD) are preferably used.

The recorded object of the invention may be applied to any application, for example, it may be applied to a decorative article or other matters. Specific examples of the recorded object of the invention include an interior article for a vehicle such as a console lid, a switch base, a center cluster, an interior panel, an emblem, a center console, and a meter nameplate, an operating unit of various electronic equipment (key switches), a decorative portion that exhibits decorativeness, and a display matter such as an index and of a logo.

As described above, the invention is described based on the preferred embodiments; however, the invention is not limited the embodiments.

For example, in the above described embodiments, the case where the recorded object of the invention is formed of the recording medium (the base material) and the printing unit is mainly described; however, the recorded object of the invention may have other components in addition to the recording medium (the base material) and the printing unit. Examples

Next, specific examples of the invention will be described below.

### 1. Manufacture of composition for manufacturing recorded object

### Example 1

First, a film with a smooth surface (surface roughness Ra is equal to or less than 0.02 µm) which is formed of polyethylene terephthalate was prepared.

Next, one surface of this film was entirely coated with silicone oil.

Subsequently, a film formed of Al was formed through on the surface which was coated with the silicone oil through an evaporation method.

Then, the film (the base material) formed of polyethylene terephthalate on which the Al film was formed was put into a liquid which was obtained by dissolving 1 part by mass of CF₃(CF₂)₅(CH₂)₂O-PO(OH)₂ as a fluorine-based surface treating agent with 99 parts by mass of diethylene glycol diethyl ether, and then ultrasonic vibration of 27 kHz was imparted to a mixture at 55°C for 3 hours. With this, a dispersion liquid for the metal powder formed of particles having a scaly shape of which the base particle formed of Al subjected to the surface treatment by using CF₃(CF₂)₅(CH₂)₂O-PO(OH)₂ was obtained.

The volume average particle size of the metal powder obtained as above was 0.45 µm, the fine particle size (D₁₀) from the fine particle side of the metal powder at the volume cumulative distribution rate 10% was 0.28 µm, the fine particle size (D₉₀) from the fine particle side of the metal powder at the volume cumulative distribution rate 90% was 0.76 µm, and the half-value width of the metal powder in the particle size distribution was 0.32 µm. These values were measured by Microtrack MT-3000 (manufactured by Nikkiso Co., Ltd.).

Next, the composition for manufacturing a recorded object (the ultraviolet curable composition) was obtained by mixing the dispersion liquid of the metal powder with acryloyl morpholine as a monomer having an alicyclic structure (a polymerizable compound), phenoxyethylacrylate as a monomer that does not have an alicyclic structure (a polymerizable compound), tetrahydrofurfuryl acrylate as a monomer having an alicyclic structure (a polymerizable compound), DISPERBYK-2155 (manufactured by BYK-Chemie Co., Ltd.) as a basic polymer dispersant, a substance A having a chemical structure expressed by formula (9) described below, Irgacure 819 (manufactured by Ciba Japan K.K.) as a photopolymerization initiator, Speedcure TPO (manufactured by ACETO CORP.) as a photopolymerization initiator, and Speedcure DETX (manufactured by Lambson) and LF-1984 (manufactured by Kusumoto Co., Ltd.) as a photopolymerization initiator.

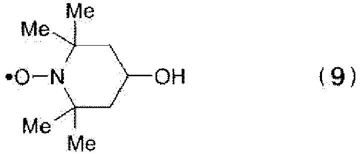

### Examples 2 to 20

The composition for manufacturing a recorded object (the ultraviolet curable composition) was manufactured in the same way as in the above Example 1 except that the constituting particle of the metal powder is formed as indicated in Table 1, and the type and proportion of raw materials which are used to manufacture the composition for manufacturing a recorded object (the ultraviolet curable composition) are changed so as to make the compositions indicated in Table 2 and Table 3.

### Comparative Example 1

The composition for manufacturing a recorded object (the ultraviolet curable composition) was manufactured in the same way as in the above Example 1 except that a liquid which does not contain the surface treating agent (diethylene glycol dimethyl ether and diethylene glycol diethyl ether) was used when imparting the ultrasonic vibration to a film (a base material) which is made of polyethylene terephthalate, on which an Al film is formed. That is, the composition for manufacturing a recorded object (the ultraviolet curable composition) of Comparative Example 1 contains only the particle which is not subjected to the surface treatment as the constituting particle of the metal powder.

### Comparative Examples 2 and 3

The composition for manufacturing a recorded object (the ultraviolet curable composition) was manufactured in the same way as in the above Example 1 except that the particle size distribution of the metal powder is changed by changing the time of imparting the ultrasonic vibration with respect to the film (the base material) which is made of polyethylene terephthalate, on which the Al film is formed.

### Comparative Example 4

The metal powder having the scaly shape which is obtained by the same way in Example 1, 1,2-hexanediol, trimethylolpropane, Surfynol 465 (manufactured by Nissin Chemical Industry Co., Ltd.), triethanolamine, glycerin, Polyflow 401 (manufactured by Nissin Chemical Industry Co., Ltd.), and ion exchange water were mixed so as to manufacture the composition for manufacturing a recorded object. That is, the composition for manufacturing a recorded object in Comparative Example 4 does not contain a polymerizable compound (a binder) which is cured by the irradiation of ultraviolet.

### Comparative Example 5

The composition for manufacturing a recorded object (the ultraviolet curable composition) was manufactured in the same way as in the above Example 1 except that a spherical Al powder (which is not subjected to the surface treatment by using the surface treating agent) which is manufactured by using a gas atomizing method is used as the metal powder.

Regarding the respective Examples and Comparative Examples, the configurations of the metal powder which is contained in the composition for manufacturing a recorded object are collectively indicated in Table 1, and the compositions for manufacturing the recorded object are collectively indicated in Table 2 and Table 3. Meanwhile, in Tables, CF₃(CF₂)₅(CH₂)₂O-PO(OH)₂ as a fluorine-based phosphate compound is referred to as "FAP1", (CF₃(CF₂)₇CH₂CH₂Si(OC₂H₅)₃) as a fluorine-based silane compound is referred to as "FAS1", (CF₃(CF₂)₅CH₂CH₂Si(OC₂H₅)₃) as a fluorine-based silane compound is referred to as "FAS2", CF₃(CF₂)₇(CH₂)₂COOH as a fluorine-substituted fatty acid is referred to as "FFA1", CF₃(CF₂)₇(CH₂)₂NCO as a fluorine-based isocyanate compound is referred to as "IS1", a lauryl phosphoric acid: CH₃(CH₂)₁₁-(OCH₂CH₂)₂-O-PO(OH)₂ as a an alkyl phosphate compound is referred to as "LA", a laureth-2 phosphoric acid: CH₃(CH₂)₁₁-(OCH₂CH₂)₂-O-PO(OH)₂ as an alkyl ether phosphate compound is referred to as "LP", octyl triethoxysilane as an alkyl silane compound is referred to as "OTS", CH₃(CH₂)₇O-PO(OH)₂ is referred to as "AP1", γ-butyrolactone acrylate as a monomer having an alicyclic structure (a polymerizable compound) is referred to as "BLA", tetrahydrofurfuryl acrylate as a monomer having an alicyclic structure (a polymerizable compound) is referred to as "THFA", N-vinyl caprolactam as a monomer having an alicyclic structure (a polymerizable compound) is referred to as "VC", N-vinyl pyrrolidone as a monomer having an alicyclic structure (a polymerizable compound) is referred to as "VP", acryloyl morpholine as a monomer having an alicyclic structure (a polymerizable compound) is referred to as "AMO", tris(2-acryloyloxyethyl) isocyanurate as a monomer having an alicyclic structure (the polymerizable compound) is referred to as "TAOEI", dicyclopentenyloxyethyl acrylate as a monomer having an alicyclic structure (a polymerizable compound) is referred to as "DCPTeOEA", adamantyl acrylate as a monomer having an alicyclic structure (a polymerizable compound) is referred to as "AA", dimethylol tricyclodecane diacrylate as a monomer having an alicyclic structure (a polymerizable compound) is referred to as "DMTCDDA", di-cyclopentane diacrylate as a monomer having an alicyclic structure (a polymerizable compound) is referred to as "DMDCPTA", dicyclopentenyl acrylate as a monomer having an alicyclic structure (a polymerizable compound) is referred to as "DCPTeA", dicyclopentanyl acrylate as a monomer having an alicyclic structure (a polymerizable compound) is referred to as "DCPTaA", isobornyl acrylate as a monomer having an alicyclic structure (a polymerizable compound) is referred to as "IBA", cyclohexyl acrylate as a monomer having an alicyclic structure (a polymerizable compound) is referred to as "CHA", diacrylate isocyanurate as a monomer having an alicyclic structure (a polymerizable compound) is referred to as "DAI", triacryl isocyanurate as a monomer having an alicyclic structure (a polymerizable compound) is referred to as "TAI", γ-butyrolactone methacrylate as a monomer having an alicyclic structure (a polymerizable compound) is referred to as "BLM", tetrahydrofurfuryl methacrylate as a monomer having an alicyclic structure (a polymerizable compound) is referred to as "THFM", dicyclopentenyloxyethyl methacrylate as a monomer having an alicyclic structure (a polymerizable compound) is referred to as "DCPTeOEM", adamantyl methacrylate as a monomer having an alicyclic structure (a polymerizable compound) is referred to as "AM", pentamethyl piperidyl methacrylate as a monomer having an alicyclic structure (a polymerizable compound) is referred to as "PMPM", tetramethyl piperidyl methacrylate as a monomer having an alicyclic structure (a polymerizable compound) is referred to as "TMPM", 2-methyl-2-adamantyl methacrylate as a monomer having an alicyclic structure (a polymerizable compound) is referred to as "MAM", 2-ethyl-2-adamantyl methacrylate as a monomer having an alicyclic structure (a polymerizable compound) is referred to as "EAM", mevalonate lactone methacrylate as a monomer having an alicyclic structure (a polymerizable compound) is referred to as "MLM", dicyclopentenyl methacrylate as a monomer having an alicyclic structure (a polymerizable compound) is referred to as "DCPTeM", Dicyclopentanyl methacrylate as a monomer having an alicyclic structure (a polymerizable compound) is referred to as "DCPTaM", isobornyl methacrylate as a monomer having an alicyclic structure (a polymerizable compound) is referred to as "IBM", cyclohexyl methacrylate as a monomer having an alicyclic structure (a polymerizable compound) is referred to as "CHM", cyclohexane spiro-2-(1,3-dioxolan -4-yl) methyl acrylate as a monomer having an alicyclic structure (a polymerizable compound) is referred to as "CHDOLA", (2-methyl-2-ethyl-1,3-dioxolan -4-yl) methyl acrylate as a monomer having an alicyclic structure (a polymerizable compound) is referred to as "MEDOLA", phenoxyethylacrylate as a monomer that does not contain an alicyclic structure (a polymerizable compound) is referred to as "PEA", dipropylene glycol diacrylate as a monomer that does not contain an alicyclic structure (a polymerizable compound) is referred to as "DPGDA", tripropylene glycol diacrylate as a monomer that does not contain an alicyclic structure (a polymerizable compound) is referred to as "TPGDA", 2-hydroxy-3-phenoxy propyl acrylate as a monomer that does not contain an alicyclic structure (a polymerizable compound) is referred to as "HPPA", 4-hydroxy-butyl acrylate as a monomer that does not contain an alicyclic structure (a polymerizable compound) is referred to as "HBA", ethyl carbitol acrylate as a monomer that does not contain an alicyclic structure (a polymerizable compound) is referred to as "ECA", methoxy triethylene glycol acrylate as a monomer that does not contain an alicyclic structure (a polymerizable compound) is referred to as "MTEGA", t-butyl acrylate as a monomer that does not contain an alicyclic structure (a polymerizable compound) is referred to as "TBA", benzyl acrylate as a monomer that does not contain an alicyclic structure (a polymerizable compound) is referred to as "BA", 2-acrylate (2-hydroxyethoxy) ethyl as a monomer that does not contain an alicyclic structure (a polymerizable compound) is referred to as "VEEA", benenzyl methacrylate as a monomer that does not contain an alicyclic structure (a polymerizable compound) is referred to as "BM", urethane acrylate as a monomer that does not contain an alicyclic structure (a polymerizable compound) is referred to as "UA", DISPERBYK-182 (manufactured by BYK-Chemie Co., Ltd., amine value: 13 mgKOH/g) as a basic polymer dispersant is referred to as "D2", DISPERBYK-2155 (manufactured by BYK-Chemie Co., Ltd., amine value: 48 mgKOH/g) as a basic polymer dispersant is referred to as "D5", a compound (substance A) expressed by the formula (9) is referred to as "A1", a compound (substance A) expressed by formula (10) described below is referred to as "A2", a compound (substance A) expressed by formula (11) described below is referred to as "A3", a substance A expressed by formula (12) described below is referred to as "A4", Irgacure 819 (manufactured by Ciba Japan K.K.) is referred to as "ic 819", Speedcure TPO (manufactured by ACETO CORP.) is referred to as "sc TPO", Speedcure DETX (manufactured by Lambson) is referred to as "sc DETX", BYK-350 (manufactured by BYK-Chemie Co., Ltd.) is referred to as "BYK350", hydroquinone monomethyl ether is referred to as "MEHQ", 1,2-hexanediol refers to "1,2HD", trimethylolpropane is referred to as "TMP", Surfynol 465 (manufactured by Nissin Chemical Industry Co., Ltd.) is referred to as "S465", triethanolamine is referred to as "TEA", glycerin is referred to as "GL", LHP-96 (manufactured by Kusumoto Co., Ltd.) is referred to as "LHP", LF-1982 (manufactured by Kusumoto Co., Ltd.) is referred to as "LF-1", LF-1984 (manufactured by Kusumoto Co., Ltd.) is referred to as "LF-2", and Polyflow 401 (manufactured by Nissin Chemical Industry Co., Ltd.) is referred to as "PF401". In addition, in Table 1, in Example 15, regarding a composition of a constituting material of the base particle, the content of each element is indicated by a weight ratio. In addition, the viscosity of the composition for manufacturing a recorded object (the ultraviolet curable composition) in each Example of the invention measured by using a vibration type viscometer based on JIS Z8809 at 20°C is in a range of 3 mPa·s to 15 mPa·s. Further, regarding the metal powder which forms the composition for manufacturing a recorded object (the ultraviolet curable composition) in each Example, the observation is optionally performed for ten metal particles by using a transmission electron microscope (TEM, JOEL JEM-2000EX), and a ratio (S₁/S₀) of an area S₁ [µm²], which is the maximum projected area when the particle is observed in a plan view, to an area S₀ [µm²], which is the maximum area of the projected areas obtained when observed from the direction orthogonal to the observation direction is calculated , and when the average value of the ratio is calculated, the average value of S₁/S₀ is equal to or greater than 19. In addition, D2 and D5 are basic and have a polymer structure (a basic polymer dispersant). In addition, in the composition for manufacturing a recorded object (the ultraviolet curable composition) in the respective Examples and Comparative Examples 2 to 4, the content of constituting particle in which the entire metal powder is subjected to the surface treatment is equal to or greater than 99 mass%.

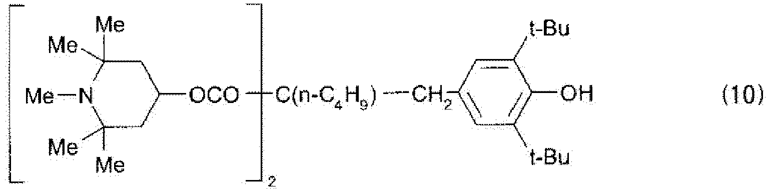

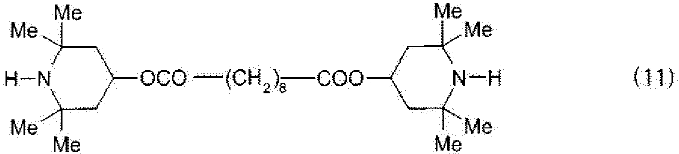

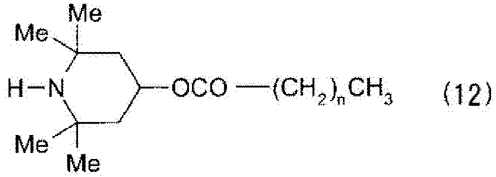

(Here, a substance A expressed in formula (12) is a mixture of a plurality of compounds in which n in the formula is in a range of 10 to 19 (a main component is a compound in which n in the formula is in a range of 15 to 18).)

**Table 1**

| | Shape | Constituting material of base particle | Material used for surface treatment | Volume average particle size [µm] | D₁₀ [µm] | D₉₀ [µm] | Half-width [µm] | Average thickness [nm] |
|---|---|---|---|---|---|---|---|---|
| Example 1 | Scaly | Al | FAP1 | 0.45 | 0.28 | 0.76 | 0.32 | 20 |
| Example 2 | Scaly | Al | FAP1 | 0.20 | 0.13 | 0.46 | 0.24 | 10 |
| Example 3 | Scaly | Al | FAP1 | 0.64 | 0.40 | 1.08 | 0.43 | 30 |
| Example 4 | Scaly | Al | FAP1 | 0.45 | 0.26 | 0.85 | 0.39 | 40 |
| Example 5 | Scaly | Al | FAP1 | 0.62 | 0.38 | 1.10 | 0.45 | 80 |
| Example 6 | Scaly | Al | FAP1 | 0.45 | 0.28 | 0.76 | 0.32 | 20 |
| Example 7 | Scaly | Al | FAP1 | 0.51 | 0.30 | 0.88 | 0.33 | 40 |
| Example 8 | Scaly | Al | FAS1 | 0.64 | 0.39 | 1.07 | 0.43 | 30 |
| Example 9 | Scaly | Al | FAS1 | 0.50 | 0.31 | 0.84 | 0.35 | 20 |
| Example 10 | Scaly | Al | FAS2 | 0.50 | 0.31 | 0.84 | 0.35 | 20 |
| Example 11 | Scaly | Al | FAP1 | 0.64 | 0.39 | 1.05 | 0.42 | 30 |
| Example 12 | Scaly | Al | LA | 0.51 | 0.30 | 0.88 | 0.33 | 20 |
| Example 13 | Scaly | Al | LP | 0.45 | 0.28 | 0.76 | 0.32 | 20 |
| Example 14 | Scaly | Al | OTS | 0.43 | 0.27 | 0.75 | 0.30 | 20 |
| Example 15 | Scaly | Ni49.5Fe50.5 | FAS1 | 0.63 | 0.39 | 1.09 | 0.44 | 40 |
| Example 16 | Scaly | SUS316L | FAS1 | 0.62 | 0.39 | 1.06 | 0.44 | 40 |
| Example 17 | Scaly | Al | FAP1 | 0.45 | 0.28 | 0.76 | 0.32 | 20 |
| Example 18 | Scaly | Al | FFA1 | 0.45 | 0.28 | 0.76 | 0.32 | 20 |
| Example 19 | Scaly | Al | IS1 | 0.45 | 0.28 | 0.76 | 0.32 | 20 |
| Example 20 | Scaly | Al | AP1 | 0.45 | 0.28 | 0.76 | 0.32 | 20 |
| Comparative Example 1 | Scaly | Al | - | 0.45 | 0.28 | 0.76 | 0.32 | 30 |
| Comparative Example 2 | Scaly | Al | FAP1 | 0.15 | 0.10 | 0.38 | 0.20 | 10 |
| Comparative Example 3 | Scaly | Al | FAP1 | 0.70 | 0.40 | 1.26 | 0.48 | 20 |
| Comparative Example 4 | Scaly | Al | LP | 0.46 | 0.29 | 0.80 | 0.35 | 20 |
| Comparative Example 5 | Spherical | Al | - | 0.58 | 0.38 | 0.95 | 0.40 | - |

**Table 2**

| | Metal powder | Polymerizable compound | | Dispersant | | Substance A | | Other components | |
|---|---|---|---|---|---|---|---|---|---|
| | Content [Part by mass] | | Content [Part by mass] | | Content [Part by mass] | | Content [Part by mass] | | Content [Part by mass] |
| Example 1 | 1.5 | AMO/PEA/THFA | 50.0/20.0/16.9 | D5 | 1.4 | A1 | 0.2 | ic819/scTPO/scDETX/LF-1 | 4.0/4.0/1.0/1.0 |
| Example 2 | 1.5 | AMO/THFA | 42.2/45.1 | - | - | A1 | 0.8 | ic819/scTPO/scDETX/LHP/LF-2 | 4.0/4.0/0.4/1.0/1.0 |
| Example 3 | 1.5 | AMO/THFA | 42.2/45.1 | - | - | A1 | 0.8 | ic819/scTPO/scDETX/LHP/LF-2 | 4.0/4.0/0.4/1.0/1.0 |
| Example 4 | 3.0 | BLA/THFM/TAOEI/DCPTeOEA/AA/PEA/DPGDA | 37.3/5.0/20.8/11.4/5.4/3.9/3.9 | - | - | A3 | 0.7 | ic819/scTPO/BYK350/MEHQ | 4.0/4.0/0.2/0.2 |
| Example 5 | 1.3 | AM/PMPM/TMPM/MAM/EAM/DCPTeA/PEA/TPGDA/VEEA | 3.8/7.8/3.0/3.0/3.1/3.2/60.0/1.2/2.0 | - | - | A4 | 1.2 | ic819/scTPO/scDETX/BYK350/MEHQ | 4.0/4.0/0.4/1.5/0.5 |
| Example 6 | 5.0 | DCPTeOEM/MLM/DMTCDDA/AMO/IBA/CHM/PEA/HPPA | 3.4/3.4/19.4/30.6/8.6/8.4/4.9/4.9 | - | - | A1 | 1.0 | ic819/scTPO/scDETX/BYK350/MEHQ | 4.0/4.0/0.4/1.5/0.5 |
| Example 7 | 2.0 | DMDCPTA/DCPTeM/DCPTaM/IBM/CHA/PEA/HBA/AMO | 2.0/4.5/6.5/5.9/17.6/4.1/1.1/45.7 | - | - | A1 | 0.58 | ic819/scTPO/scDETX/LF-2 | 4.0/4.0/1.0/1.0 |
| Example 8 | 1.5 | BLA/AMO/PEA/HBA/THFA | 29.6/35.6/9.7/9.2/3.2 | - | - | A2 | 0.8 | ic819/scTPO/scDETX/BYK350/MEHQ | 4.0/4.0/0.4/1.5/0.5 |
| Example 9 | 1.5 | BLA/AMO/VC/VP | 25.1/33.4/7.2/19.8 | D2 | 1.4 | A1 | 1.4 | ic819/scTPO/scDETX/LHP/LF-2 | 4.0/4.0/0.2/1.0/1.0 |
| Example 10 | 1.5 | BLA/AMO/TBA/VEEA/UA | 27.6/23.3/14.8/9.5/12.5 | - | - | A1 | 0.4 | ic819/scTPO/scDETX/BYK350/MEHQ | 4.0/4.0/0.4/1.5/0.5 |
| Example 11 | 1.5 | BLA/AMO/VP/PEA | 33.3/35.6/3.5/16.9 | - | - | A3 | 0.8 | ic819/scTPO/LHP/LF-2 | 4.0/4.0/0.2/0.2 |
| Example 12 | 1.5 | BLA/AMO/VEEA/BM/UA | 26.5/24.4/14.2/16.3/10.3 | D5 | 0.2 | A1 | 0.2 | ic819/scTPO/LF-2/MEHQ | 4.0/2.0/0.2/0.2 |

**Table 3**

| | Metal powder | Polvmerizable compound | | Dispersant | | Substance A | | Other components | |
|---|---|---|---|---|---|---|---|---|---|
| | Content [Part by mass] | | Content [Part by mass] | | Content [Part by mass] | | Content [Part by mass] | | Content [Part by mass] |
| Example 13 | 2.0 | AMO/THFA/PEA | 34.6/31.7/20.1 | - | - | A4 | 1.2 | ic819/scTPO/scDETX/LF-2/MEHQ | 4.0/4.0/2.0/0.2/0.2 |
| Example 14 | 2.0 | DAI/TAI/ ECA/MTEGA/IBA/BA | 21.3/19.2/17.6/17.1/5.9/5.5 | - | - | A1 | 1.0 | ic819/scTPO/scDETX/BYK350/MEHQ | 4.0/4.0/2.0/0.2/0.2 |
| Example 15 | 2.0 | AMO/THFA/TBA/VEEA/UA | 27.8/26.1/13.6/15.3/4.0 | - | - | A2 | 0.8 | ic819/scTPO/scDETX/LHP/MEHQ | 4.0/4.0/2.0/0.2/0.2 |
| Example 16 | 2.0 | AMO/THFA/VEEA/BM/MEDOLA | 25.7/28.6/13.8/15.3/4.0 | D5 | 0.2 | A1 | 0.2 | ic819/scTPO/scDETX/LHP | 4.0/4.0/2.0/0.2 |
| Example 17 | 2.5 | AMO/THFA | 52.1/34.7 | - | - | A2 | 0.3 | ic819/scTPO/scDETX/LHP/LF-1 | 4.0/4.0/2.0/0.2/0.2 |
| Example 18 | 1.5 | AMO/THFA/BA | 41.1/39.8/6.9 | - | - | A2 | 0.3 | ic819/scTPO/scDETX/LHP/LF-1 | 4.0/4.0/2.0/0.2/0.2 |
| Example 19 | 1.5 | AMO/BA/DCPTaA/CHDOLA | 24.0/21.2/26.3/16.3 | - | - | A2 | 0.3 | ic819/scTPO/scDETX/LHP/LF-1 | 4.0/4.0/2.0/0.2/0.2 |
| Example 20 | 1.5 | AMO/THFA | 52.2/33.9 | D2 | 1.0 | A1 | 1.0 | ic819/scTPO/scDETX/LHP/LF-1 | 4.0/4.0/2.0/0.2/0.2 |
| Comparative Example 1 | 1.5 | AMO/PEA/THFA | 50.0/20.0/16.9 | D5 | 1.4 | A1 | 0.2 | ic819/scTPO/scDETX/LF-1 | 4.0/4.0/1.0/1.0 |
| Comparative Example 2 | 1.5 | AMO/PEA/THFA | 50.0/20.0/16.9 | D5 | 1.4 | A1 | 0.2 | ic819/scTPO/scDETX/LF-1 | 4.0/4.0/1.0/1.0 |
| Comparative Example 3 | 1.5 | AMO/PEA/THFA | 50.0/20.0/16.9 | D5 | 1.4 | A1 | 0.2 | ic819/scTPO/scDETX/LF-1 | 4.0/4.0/1.0/1.0 |
| Comparative Example 4 | 1.5 | - | - | - | - | - | - | Water/1,2HD/TMP/S465/TEA/GL/PF401 | 69.1/3.0/14.0/1.5/0.3/9.0/0.1 |
| Comparative Example 5 | 1.5 | AMO/PEA/THFA | 50.0/20.0/16.9 | D5 | 1.4 | A1 | 0.2 | ic819/scTPO/scDETX/LF-1 | 4.0/4.0/1.0/1.0 |

### 2. Frequency characteristics of composition for manufacturing recorded object Discharge stability

The liquid droplet discharging apparatus which is installed in a chamber (a thermal chamber) and the composition for manufacturing a recorded object in the respective Examples and Comparative Examples were prepared, and under the environment of 25°C and 50%RH, and in a state where a driving waveform of a piezoelectric element was optimized, the liquid droplets of the respective compositions for manufacturing the recorded object were discharged from the entire nozzles, of which a hole diameter is 22 µm, of the liquid droplet discharge head while changing the number of vibrations (frequency) of the piezoelectric element. The discharging time for the liquid droplets at each frequency was set to be 20 minutes. After discharging for 20 minutes, the frequency when the number of nozzles which do not discharge the liquid droplets is less than 0.5% with respect to the total number of nozzles is set to be a maximum frequency which is practically usable, and the range of the practically usable frequency is evaluated on the basis of the following 4 stages of criteria. It can be said that when this value is large, the frequency characteristics are excellent.
A: equal to or greater than 15kHz
B: equal to or greater than 11kHz and less than 15kHz
C: equal to or greater than 5kHz and less than 11kHz
D: less than 5kHz

### 3. Evaluation of storage stability of composition for manufacturing recorded object Evaluation of long-term stability

### 3.1 Dispensability

The composition for manufacturing a recorded object in the respective Examples and Comparative Examples was left to stand for 60 days under the environment at 40°C, then the mass concentration of the metal powder in the composition for manufacturing a recorded object before and after filtering the liquid was measured when 1 L of liquid was filtered by using a capsule filter (manufactured by Yamashin filter Co., Ltd.) with 3 µm of filtration accuracy. A loss which is generated by filtering coarse particles caused by insufficient dispersion is calculated by a mass concentration decrease rate, and then the evaluation thereof is performed on the basis of the following criteria.
A: Ink concentration decrease rate is less than 5%
B: Ink concentration decrease rate is equal to or greater than 5% and less than 10%
C: Ink concentration decrease rate is equal to or greater than 10% and less than 20%
D: Ink concentration decrease rate is equal to or greater than 20% and less than 40%
E: Ink concentration decrease rate is equal to or greater than 40%

### 3.2 Viscosity increase rate

The composition for manufacturing a recorded object in the respective Examples and Comparative Examples was left to stand for 60 days under the environment at 40°C, then the viscosity of the composition for manufacturing a recorded object at 20°C in the respective Examples, which was measured in accordance with JISZ 8809 was measured by using a vibration type viscometer. A rate of increase of the viscosity was calculated compared to the viscosity immediately after the composition was manufactured, and then the evaluation was performed on the basis of the following criteria.
A: Viscosity increase rate is less than 5%
B: Viscosity increase rate is equal to or greater than 5% and less than 10%
C: Viscosity increase rate is equal to or greater than 10% and less than 18%
D: Viscosity increase rate is equal to or greater than 18% and less than 23%
E: Viscosity increase rate is equal to or greater than 23% or foreign matters are generated

### 4. Curability

The composition for manufacturing a recorded object in the respective Examples and Comparative Examples was introduced to an inkjet printer manufactured by Epson (PM800C), and solid printing was performed at an ink amount of wet 9 g/m² by using Daifoil G440E (thickness: 38 µm) manufactured by Mitsubishi Plastics, Inc. as a recording medium. Immediately after printing, irradiation of an ultraviolet ray was performed by using an LED-UV lamp (RX firefly) (gap of 6 mm, peak wavelength of 395 nm, 1000 mW/cm²) manufactured by Phoseon Technology, it was confirmed whether or not the composition for manufacturing a recorded object was cured, and then the evaluation was performed on the basis of the following 5 stages of criteria. Whether or not the composition for manufacturing a recorded object was cured was determined by whether or not uncured ink compositions were attached on the surface when rubbing the surface by a cotton swab. In addition, irradiation amounts described in the following A to E can be calculated depending on the time of irradiation by using the lamp.
A: Cured by ultraviolet irradiation amount which is less than 200 mJ/cm²
B: Cured by ultraviolet irradiation amount which is equal to or greater than 200 mJ/cm² and less than 350 mJ/cm²
C: Cured by ultraviolet irradiation amount which is equal to or greater than 350 mJ/cm² and less than 500 mJ/cm²
D: Cured by ultraviolet irradiation amount which is equal to or greater than 500 mJ/cm² and less than 1000 mJ/cm²
E: Cured by ultraviolet irradiation amount which is equal to or greater than 1000 mJ/cm², or not cured at all

### 5. Manufacture of recorded object

As the recorded object, interior panels were manufactured as below by using the composition for manufacturing a recorded object in the respective Examples and Comparative Examples.

First, the composition for manufacturing a recorded object was put into an ink jet apparatus.

Thereafter, the composition for manufacturing a recorded object was discharged on a base material (a recording medium) having a curved surface portion which is formed by using polycarbonate (Carboglass Polish (thickness: 2 mm) manufactured by Asahi Glass Co., Ltd.) in a predetermined pattern.

Then, after heating at 60°C for 5 minutes, the composition for manufacturing a recorded object on the base material was irradiated with the ultraviolet in a spectrum having maximum values at wavelengths of 365 nm, 380 nm, and 395 nm with irradiation intensity of 160 mW/cm² for 10 seconds and was cured and thereby an interior panel was obtained as the recorded object.

With the above-described method, 10 interior panels (the recorded objects) were manufactured by using the composition for manufacturing a recorded object in the respective Examples and Comparative Examples.

In addition, 10 interior panels (the recorded objects) were manufactured by using the composition for manufacturing a recorded object in the respective Examples and Comparative Examples, in the same method as described above except for using a material formed by using polyethylene terephthalate (Daifoil G440E (thickness: 38 µm) manufactured by Mitsubishi Plastics, Inc.), a material formed by using polyethylene having low density (T.U.X (L-LDPE) HC-E #80 manufactured by Mitsui Chemicals Tohcello, Inc.), a material formed by using biaxially oriented polypropylene (OP U-1 #60 manufactured by Mitsui Chemicals Tohcello, Inc.), and a material formed by using rigid polyvinyl chloride (Sunday sheet (transparent, thickness: 0.5 mm) manufactured by ACRYSUNDAY CO., Ltd) as a base material.

### 6. Evaluation of recorded object

Regarding the respective recorded objects obtained as described above, the evaluation was performed as follows.

### 6.1. Evaluation of appearance of recorded object

The recorded objects manufactured in the respective Examples and Comparative Examples were visually observed, and then the evaluation was performed on the basis of the following 7 stages of criteria.
A: Glossiness with sophisticated feelings and greatly excellent appearance
B: Glossiness with sophisticated feelings and very excellent appearance
C: Glossiness with sophisticated feelings and excellent appearance
D: Glossiness with sophisticated feelings and good appearance
E: Inferior in glossiness and slight defect in appearance
F: Inferior in glossiness and defect in appearance
G: Inferior in glossiness and considerable defect in appearance

### 6.2 Glossiness

Regarding a pattern forming unit of the respective recorded object manufactured in the respective Examples and Comparative Examples, the glossiness at a flap angle of 60° was measured by using a glossmeter (MINOLTA MULTI GLOSS 268), and then the evaluation was performed on the basis of the following criteria.
A: Glossiness is equal to or greater than 350
B: Glossiness is equal to or greater 250 and less than 350
C: Glossiness is equal to or greater 150 and less than 250
D: Glossiness is less than 150

### 6.3 Abrasion resistance

Regarding the recorded object in the respective Examples and Comparative Examples, after 48 hours has elapsed form the manufacture of the recorded object, based on JIS L0849, the recorded object was rubbed 30 times by using cloth with a load of 500g in a Japan Society for the Promotion of Science (JSPS)-type fastness tester, and regarding the recorded object after being rubbed with cloth, the glossiness (at the flap angle 60°) was measured by using the same method as described above [6.2], the decreasing rate of the glossiness was calculated before and after rubbing the recorded object by using the cloth, and then the evaluation was performed on the basis of the following criteria.
A: Decreasing rate of glossiness is less than 10%
B: Decreasing rate of glossiness is equal to or greater 10% and less than 20%
C: Decreasing rate of glossiness is equal to or greater 20% and less than 30%
D: Decreasing rate of glossiness is equal to or greater 30% and less than 50%
E: Decreasing rate of glossiness is equal to or greater than 50%

The above-described results are indicated in Table 4. Meanwhile, in Table 4, a recorded object which is manufactured by using a base material formed of polycarbonate is referred to as "M1", a recorded object which is manufactured by using a base material formed of polyethylene terephthalate is referred to as "M2", a recorded object which is manufactured by using a base material formed of polyethylene having low density is referred to as "M3", a recorded object which is manufactured by using a base material formed of biaxially oriented polypropylene is referred to as "M4", and a recorded object which is manufactured by using a base material formed of rigid polyvinyl chloride is referred to as "M5".

**Table 4**

| | Frequency characteristics (Discharge stability) | Storage stability | | Curability | Appearance of recorded material | | | | | Glossiness | | | | | Scratch resistance | | | | |
|---|---|---|---|---|---|---|---|---|---|---|---|---|---|---|---|---|---|---|---|
| | | Dispersibility | Viscosity increase rate | | M1 | M2 | M3 | M4 | M5 | M1 | M2 | M3 | M4 | M5 | M1 | M2 | M3 | M4 | M5 |
| Example 1 | A | A | A | A | A | A | A | B | A | A | B | B | B | A | A | A | A | C | A |
| Example 2 | A | A | A | A | A | A | A | A | A | A | A | B | B | A | B | B | C | C | B |
| Example 3 | A | A | A | A | A | B | B | B | A | A | B | B | B | A | B | B | B | C | B |
| Example 4 | A | A | A | B | B | B | B | B | A | B | C | C | B | B | B | C | B | B | B |
| Example 5 | A | A | A | C | B | B | C | C | B | B | C | C | C | B | A | B | B | C | B |
| Example 6 | A | A | A | C | A | B | B | C | B | B | C | B | C | B | A | B | B | B | B |
| Example 7 | A | A | A | C | B | C | B | C | B | B | C | B | C | B | A | B | B | C | B |
| Example 8 | A | A | A | B | B | B | C | B | B | A | B | B | B | B | B | B | A | C | B |
| Example 9 | A | A | C | B | B | B | B | C | B | B | B | B | C | B | B | B | A | C | B |
| Example 10 | A | A | C | A | B | B | C | C | B | B | C | C | C | B | B | B | A | C | B |
| Example 11 | A | A | A | B | B | B | B | C | B | C | C | B | B | B | B | B | B | C | B |
| Example 12 | A | B | C | A | B | B | C | C | B | C | C | B | C | B | B | B | C | C | B |
| Example 13 | A | B | B | A | B | B | C | B | B | A | A | A | B | A | B | B | B | B | B |
| Example 14 | A | B | C | A | A | A | B | C | B | C | C | C | C | B | B | B | B | B | C |
| Example 15 | B | B | B | A | B | B | C | C | B | B | C | C | B | B | A | B | B | C | B |
| Example 16 | B | B | B | A | B | B | C | C | C | B | C | C | B | B | A | B | C | C | B |
| Example 17 | A | A | A | A | A | A | A | A | A | A | A | A | B | A | B | B | B | C | B |
| Example 18 | A | A | A | A | A | A | A | A | A | A | A | B | B | B | A | A | B | B | A |
| Example 19 | A | A | A | A | A | A | A | A | A | A | B | B | B | A | B | C | C | C | B |
| Example 20 | A | A | A | A | A | B | B | B | B | B | C | C | C | B | A | A | B | C | B |
| Comparative Example 1 | A | A | E | A | F | G | G | G | F | D | D | D | D | D | A | A | B | B | B |
| Comparative Example 2 | C | A | D | A | C | C | D | D | C | A | B | C | C | B | C | D | D | E | D |
| Comparative Example 3 | D | C | C | A | B | C | C | D | C | A | B | B | C | B | B | C | C | C | B |
| Comparative Example 4 | C | E | B | - | G | G | G | G | G | D | D | D | D | D | B | B | C | C | B |
| Comparative Example 5 | D | D | B | B | G | G | G | G | G | D | D | D | D | D | B | C | C | B | B |

As being apparent from Table 4, the composition (the ultraviolet curable composition) of the invention is excellent in the discharge stability, the storage stability and the curability of liquid droplets. Further, the recorded object of the invention has excellent glossiness and appearance, and is also excellent in the abrasion resistance of pattern forming unit. In addition, stably excellent results were obtained by using the composition (the ultraviolet curable composition) of the invention regardless of the type of the recording medium. In contrast, in Comparative Examples, satisfactory results were not obtained. The foregoing description has been given by way of example only and it will be appreciated by a person skilled in the art that modifications can be made without departing from the scope of the present invention as defined by the claims.

## Claims

1. An ultraviolet curable composition comprising:
a polymerizable compound; and
metal powder,
wherein the metal powder contains a material which is subjected to surface treatment as a constituting particle, and
wherein a volume average particle size of the metal powder is in a range of 0.2 µm to 0.64 µm.

2. The ultraviolet curable composition according to Claim 1,
wherein the metal powder contains a material which is subjected to the surface treatment by using a fluorine-based surface treating agent as the constituting particle.

3. The ultraviolet curable composition according to Claim 2,
wherein the fluorine-based surface treating agent has one or two or more types selected from the group consisting of a fluorine-based silane compound, a fluorine-based phosphate compound, a fluorine-substituted fatty acid, and a fluorine-based isocyanate compound.

4. The ultraviolet curable composition according to any one of the preceding claims,
wherein the metal powder contains, as the constituting particle, a material in which a base particle of which at least a main surface is mainly formed of Al is subjected to the surface treatment by using the surface treating agent.

5. The ultraviolet curable composition according to any one of the preceding claims,
wherein the constituting particle of the metal powder is formed into a scaly shape.

6. The ultraviolet curable composition according to Claim 5,
wherein an average thickness of the constituting particle of the metal powder is in a range of 10 nm to 80 nm.

7. The ultraviolet curable composition according to any one of the preceding claims,
wherein a particle size (D₁₀) from the fine particle side of the metal powder at a volume cumulative distribution rate 10% is in a range of 0.10 µm to 0.40 µm.

8. The ultraviolet curable composition according to any one of the preceding claims,
wherein a particle size (D₉₀) from the fine particle side of the metal powder at a volume cumulative distribution rate 90% is in a range of 0.40 µm to 1.10 µm.

9. The ultraviolet curable composition according to any one of the preceding claims,
wherein a half-value width of the metal powder in a particle size distribution is equal to or lower than 0.45 µm.

10. The ultraviolet curable composition according to any one of the preceding claims, further comprising a monomer having an alicyclic structure as the polymerizable compound.

11. The ultraviolet curable composition according to Claim 10,
wherein the monomer having an alicyclic structure contains one or two or more types selected from the group consisting of tris(2-acryloyloxyethyl) isocyanurate, dicyclopentenyloxyethyl acrylate, adamantyl acrylate, γ-butyrolactone acrylate, N-vinyl caprolactam, N-vinyl pyrrolidone, pentamethyl piperidyl acrylate, tetramethyl piperidyl acrylate, 2-methyl-2-adamantyl acrylate, 2-ethyl-2-adamantyl acrylate, mevalonic acid lactone acrylate, dimethylol tricyclodecane diacrylate, dimethylol di-cyclopentane diacrylate, dicyclopentenyl acrylate, dicyclopentanyl acrylate, isobornyl acrylate, cyclohexyl acrylate, acryloyl morpholine, tetrahydrofurfuryl acrylate, cyclohexane spiro-2-(1,3-dioxolan-4-yl) methyl acrylate, and (2-methyl-2-ethyl-1,3-dioxolane-4-yl) methyl acrylate.

12. The ultraviolet curable composition according to Claim 10 or Claim 11,
wherein a polymerizable compound other than the monomer having an alicyclic structure contains one or two or more types selected from the group consisting of phenoxyethyl acrylate, benzyl acrylate, 2-acrylic acid (2-vinyloxy ethoxy)ethyl, dipropylene glycol diacrylate, tripropylene glycol diacrylate, 2-hydroxy-3-phenoxy propyl acrylate, and 4-hydroxybutyl acrylate.

13. A recorded object which is manufactured by imparting the ultraviolet curable composition according to any one of the preceding claims on a recording medium through an ink jet method, and then being irradiated with an ultraviolet ray.

## Patentansprüche

1. Ultraviolett-härtbare Zusammensetzung, umfassend:
eine polymerisierbare Verbindung; und
Metallpulver,
wobei das Metallpulver ein Material enthält, welches einer Oberflächenbehandlung als ein Bestandpartikel unterzogen wird, und
wobei eine volumendurchschnittliche Partikelgröße des Metallpulvers in einem Bereich von 0,2 µm bis 0,64 µm liegt.

2. Ultraviolett-härtbare Zusammensetzung nach Anspruch 1,
wobei das Metallpulver ein Material enthält, welches der Oberflächenbehandlung unterzogen wird, indem ein Oberflächenbehandlungsstoff auf Fluorinbasis als das Bestandpartikel verwendet wird.

3. Ultraviolett-härtbare Zusammensetzung nach Anspruch 2,
wobei der Oberflächenbehandlungsstoff auf Fluorinbasis einen oder zwei oder mehrere Typen aufweist, die aus der Gruppe ausgewählt sind, bestehend aus einer Silanverbindung auf Fluorinbasis, einer Phosphatverbindung auf Fluorinbasis, einer fluorinsubstituierte Fettsäure und einer Isocyanatverbindung auf Fluorinbasis.

4. Ultraviolett-härtbare Zusammensetzung nach einem der vorhergehenden Ansprüche,
wobei das Metallpulver als das Bestandpartikel ein Material enthält, bei dem ein Basispartikel, von dem mindestens eine Hauptoberfläche hauptsächlich aus Al gebildet ist, der Oberflächenbehandlung unterzogen wird, indem der Oberflächenbehandlungsstoff verwendet wird.

5. Ultraviolett-härtbare Zusammensetzung nach einem der vorhergehenden Ansprüche, wobei das Bestandpartikel des Metallpulvers in eine schuppige Form ausgebildet wird.

6. Ultraviolett-härtbare Zusammensetzung nach Anspruch 5,
wobei eine durchschnittliche Dicke des Bestandpartikels des Metallpulvers in einem Bereich von 10 nm bis 80 nm liegt.

7. Ultraviolett-härtbare Zusammensetzung nach einem der vorhergehenden Ansprüche,
wobei eine Partikelgröße (D₁₀) von der Feinpartikelseite des Metallpulvers bei einer Volumenkumulationsverteilungsrate von 10 % in einem Bereich von 0,10 µm bis 0,40 µm liegt.

8. Ultraviolett-härtbare Zusammensetzung nach einem der vorhergehenden Ansprüche,
wobei eine Partikelgröße (D₉₀) von der Feinpartikelseite des Metallpulvers bei einer Volumenkumulationsverteilungsrate von 90 % in einem Bereich von 0,40 µm bis 1,10 µm liegt.

9. Ultraviolett-härtbare Zusammensetzung nach einem der vorhergehenden Ansprüche,
wobei eine Halbwertsbreite des Metallpulvers in einer Partikelgrößeverteilung kleiner gleich 0,45 µm ist.

10. Ultraviolett-härtbare Zusammensetzung nach einem der vorhergehenden Ansprüche, ferner umfassend ein Monomer, das eine alicyclische Struktur als die polymerisierbare Verbindung aufweist.

11. Ultraviolett-härtbare Zusammensetzung nach Anspruch 10,
wobei das Monomer, das eine alicyclische Struktur aufweist, einen oder zwei oder mehrere Typen enthält, die aus der Gruppe ausgewählt sind, bestehend aus Tris(2-acryloyloxyethyl)isocyanurat, Dicyclopentenyloxyethylacrylat, Adamantylacylat, γ-Butyrolactonacrylat, N-vinylcaprolactam, N-vinylpyrrolidon, Pentamethylpiperidylacrylat, Tetramethylpiperidylacrylat, 2-Methyl-2-adamantylacrylat, 2-Ethyl-2-adamantylacrylat, Mevalonsäure-Lactonacrylat, Dimethyloltricyclodecandiacrylat, Dimethylol-dicyclopentandiacrylat, Dicyclopentenylacrylat, Dicyclopentanylacrylat, Isobornylacrylat, Cyclohexylacrylat, Acryloylmorpholin, Tetrahydrofurfurylacrylat, Cyclohexanspiro-2-(1,3-dioxolan-4-yl)methylacrylat und (2-Methyl-2-ethyl-1,3-dioxolan-4-yl)methylacrylat.

12. Ultraviolett-härtbare Zusammensetzung nach Anspruch 10 oder Anspruch 11,
wobei eine polymerisierbare Verbindung, die verschieden ist von dem Monomer, das eine alicyclische Struktur aufweist, einen oder zwei oder mehrere Typen, die aus der Gruppe ausgewählt sind, bestehend aus Phenoxyethylacrylat, Benzylacrylat, 2-Acrylsäure(2-vinyloxyethoxy)ethyl, Dipropylenglykoldiacrylat, Tripropylenglykoldiacrylat, 2-Hydroxy-3-phenoxypropylacrylat und 4-Hydroxybutylacrylat.

13. Aufgezeichnetes Objekt, welches hergestellt wird, indem die ultraviolett-härtbare Zusammensetzung nach einem der vorhergehenden Ansprüche auf ein Aufzeichnungsmedium durch ein Tintenstrahlverfahren gegeben wird und dann mit einer Ultraviolettstrahlung bestrahlt wird.

## Revendications

1. Composition durcissable aux ultraviolets, comprenant :
un composé polymérisable ; et
une poudre métallique,
dans laquelle la poudre métallique contient un matériau soumis à un traitement de surface en tant que particules constitutives, et
dans laquelle une taille de particule moyenne en volume de la poudre métallique est dans une plage de 0,2µm à 0,64µm.

2. Composition durcissable aux ultraviolets selon la revendication 1,
dans laquelle la poudre métallique contient un matériau qui est soumis au traitement de surface en utilisant un agent de traitement de surface à base de fluor en tant que particules constitutives.

3. Composition durcissable aux ultraviolets selon la revendication 2,
dans laquelle l'agent de traitement de surface à base de fluor a un ou deux ou davantage de types sélectionnés dans le groupe formé par un composé de silane à base de fluor, un composé de phosphate à base de fluor, un acide gras substitué par du fluor, et un composé d'isocyanate à base de fluor.

4. Composition durcissable aux ultraviolets selon l'une quelconque des revendications précédentes,
dans laquelle la poudre métallique contient, en tant particules constitutives, un matériau où une particule de base dont au moins une surface principale est essentiellement formée par de l'Al est soumise au traitement de surface en utilisant l'agent de traitement de surface.

5. Composition durcissable aux ultraviolets selon l'une quelconque des revendications précédentes, dans laquelle les particules constitutives de la poudre métallique sont formées en une forme lamelleuse.

6. Composition durcissable aux ultraviolets selon la revendication 5,
dans laquelle une épaisseur moyenne de particule constitutive de la poudre métallique est dans une plage de 10 nm à 80 nm.

7. Composition durcissable aux ultraviolets selon l'une quelconque des revendications précédentes,
dans laquelle une taille de particule (D₁₀) à partir du côté de particules fines de la poudre métallique à un taux de répartition cumulative volumique de 10 % est dans une plage de 0,10 µm à 0,40 µm.

8. Composition durcissable aux ultraviolets selon l'une quelconque des revendications précédentes,
dans laquelle la taille de particule (D90) à partir du côté de particules fines de la poudre métallique à un taux de répartition cumulative volumique de 90 % est dans une plage de 0,40 µm à 1,10 µm.

9. Composition durcissable aux ultraviolets selon l'une quelconque des revendications précédentes,
dans laquelle une largeur de demi-valeur de la poudre métallique dans une répartition de tailles de particules est inférieure ou égale à 0,45µm.

10. Composition durcissable aux ultraviolets selon l'une quelconque des revendications précédentes, comprenant en outre un monomère ayant une structure alicyclique en tant que le composé polymérisable.

11. Composition durcissable aux ultraviolets selon la revendication 10,
dans laquelle le monomère ayant une structure alicyclique contient un ou deux ou davantage de types sélectionnés dans le groupe formé par du tris(2-acryloyloxyéthyl)isocyanurate, du dicyclopentényloxyéthyl acrylate, de l'adamantyl acrylate, du γ-butyrolactone acrylate, du N-vinyl caprolactame, du N-vinyl pyrrolidone, du pentaméthyl pipéridyl acrylate, du tétraméthyl pipéridyl acrylate, du 2-méthyl-2-adamantyl acrylate, du 2-éthyl-2-adamantyl acrylate, de l'acide mévalonique lactone acrylate, du diméthylol tricyclodécane diacrylate, du diméthylol dicyclopentane diacrylate, du dicyclopentényl acrylate, du dicyclopentanyl acrylate, de l'isobornyl acrylate, du cyclohéxyl acrylate, de l'acryloyl morpholine, du tétrahydrofurfuryl acrylate, du cyclohexane spiro-2(1,3-dioxolan-4-yl) méthyl acrylate et du (2-méthyl-2-éthyl-1,3-dioxolane-4-yl) méthyl acrylate.

12. Composition durcissable aux ultraviolets selon la revendication 10 ou la revendication 11,
dans laquelle un composé polymérisable différent du monomère ayant une structure alicyclique contient un ou deux ou davantage de types sélectionnés dans le groupe formé par du phénoxyéthyle acrylate, du benzyle acrylate, du 2-acide acrylique (2-vinyloxy éthoxy) éthyle, du dipropylène glycol diacrylate, du tripropylène glycol diacrylate, du 2-hydroxy-3-phénoxy propyl acrylate, et du 4-hydroxybutyl acrylate.

13. Objet enregistré fabriqué en transmettant la composition durcissable aux ultraviolets selon l'une quelconque des revendications précédentes sur un support d'enregistrement via un procédé à jet d'encre, et en l'irradiant ensuite avec un rayon ultraviolet.
